# EUROPEAN PATENT SPECIFICATION

(11) **EP 3 085 434 B1**
(45) Date of publication and mention of the grant of the patent: **18.09.2019**
(21) Application number: 14866340.4
(22) Date of filing: 28.11.2014
(51) Int. Cl.: B01D 71/02, B01D 69/02, B01D 69/10, B01D 69/12, B01D 71/68

(54) **NANOFILTRATION OR REVERSE OSMOSIS MEMBRANE MADE OF HARD CARBON FILM, FILTERING FILTER, TWO-LAYER-BONDED-TYPE FILTERING FILTER, AND METHODS FOR MANUFACTURING SAME**
NANOFILTRATIONS- ODER UMKEHROSMOSE-MEMBRAN AUS HARTEM KOHLENSTOFFFILM, FILTERUNGSFILTER, ZWEILAGIGES GEBONDETES FILTERUNGSFILTER UND VERFAHREN ZUR HERSTELLUNG DAVON
MEMBRANE D'OSMOSE INVERSE OU DE NANOFILTRATION RÉALISÉE EN FILM DE CARBONE DUR, FILTRE DE FILTRAGE, FILTRE DE FILTRAGE DE TYPE LIÉ À DEUX COUCHES, ET PROCÉDÉS DE FABRICATION ASSOCIÉS

(30) Priority: 29.11.2013 JP 2013248276; 10.04.2014 JP 2014081284; 19.08.2014 JP 2014166289
(43) Date of publication of application: 26.10.2016
(73) Proprietor: National Institute for Materials Science, Tsukuba-shi, Ibaraki 305-0047 (JP)
(72) Inventor: ICHINOSE Izumi, Tsukuba-shi Ibaraki 305-0047 (JP); FUJII Yoshihisa, Tsukuba-shi Ibaraki 305-0047 (JP); SAMITSU Sadaki, Tsukuba-shi Ibaraki 305-0047 (JP)
(74) Representative: Dehns
(86) International application number: PCT/JP2014/081601
(87) International publication number: WO 2015/080259

(56) References cited:
- EP-A1- 1 723 999
- WO-A1-2005/087355
- DE-A1- 3 013 357
- JP-A- S63 185 428
- JP-A- 2012 036 061
- JP-A- 2012 036 061
- JP-A- 2013 193 053
- US-A- 6 039 792
- WANG L J ET AL: "Carbon-based molecular sieve membranes for gas separation by inductively-coupled-plasma chemical vapor deposition", MICROPOROUS AND MESOPOROUS MATERIALS, ELSEVIER, AMSTERDAM, NL, vol. 77, no. 2-3, 26 January 2005 (2005-01-26), pages 167-174, XP027704772, ISSN: 1387-1811 [retrieved on 2005-01-26]
- A Ismail ET AL: "A review on the latest development of carbon membranes for gas separation", Journal of Membrane Science, vol. 193, no. 1, 31 October 2001 (2001-10-31), pages 1-18, XP055564650, NL ISSN: 0376-7388, DOI: 10.1016/S0376-7388(01)00510-5

## Description

### Technical Field

The present invention relates to a nanofiltration membrane (NF membrane) or a reverse osmosis membrane (RO membrane) made of a hard carbon film, a filtering filter, a two-layer-bonded-type filtering filter, and methods for manufacturing the same. In particular, the present invention relates to an NF or RO membrane made of a hard carbon film that has oil resistance and can separate an azobenzene dye present in an organic solvent from the organic solvent to the extent of 99% or more, a filtering filter, a two-layer-bonded-type filtering filter, and methods for manufacturing the same.

### Background Art

A carbon film has heat resistance and is chemically stable, and thus practical research on the carbon film has mainly proceeded as a gas separation membrane. In addition, several kinds of research on the application of the carbon film as a water treatment membrane have been reported in 1970s. For example, the research has been reported by Hollahan et al. that a carbon film manufactured by plasma polymerization of allylamine indicates performance as a reverse osmosis membrane (Non Patent Literature 1).

However, the reverse osmosis membrane manufactured by carbon was insufficient in water permeability. For this reason, only a polymer-based reverse osmosis membrane has been studied in this industrial field. For example, a crosslinked polyamide-based reverse osmosis membrane has been widely used as a membrane for seawater desalination from facts of having a high removal rate of salt and high water permeability, having pressure resistance, and being easily modularized. In addition, the crosslinked polyimide membrane is manufactured as a reverse osmosis membrane or a nanofiltration membrane resistant to the organic solvent. However, with respect to such a polymer-based membrane, a permeation rate of the organic solvent is very slow, and thus the use thereof is limited. Meanwhile, the reverse osmosis membrane made of carbon has been scarcely studied in recent years, but a filtering filter of diamond-like carbon is contrived by Ichinose et al. who is also the inventor of the present invention, whereby a dye present in the organic solvent is separated and filtered at a high speed (Patent Literature 1, Non Patent Literatures 2 and 3).

In this research, by use of high-strength diamond-like carbon, pores having a size of 1 nanometer are stabilized and high-speed permeability is realized. Typically, in the carbon film, the strength of the membrane is insufficient in many cases, swelling or partial melting occurs with organic solvents. However, the diamond-like carbon film of Non Patent Literature 2 is chemically stable with respect to all of the organic solvents, and stably holds pores into which organic solvents permeate.

Despite the development of the excellent filtering filter made of the diamond-like carbon, there are several important hurdles for its practical uses. For example, in the diamond-like carbon film of Non Patent Literature 2, a microfiltration membrane is used as a substrate, but the diamond-like carbon cannot be directly deposited on the microfiltration membrane and nanostrands are inevitably used as a sacrificial layer. Such nanostrands are used as an excellent sacrificial layer capable of being easily soluble in an acid or the like, but there are intrinsically several problems. First, the use of a wet filtration method is necessary for the formation of a nanostrand layer, and thus a manufacturing process becomes complicated. Then, the wet filtration method mismatches a subsequent method (vacuum deposition) for forming the diamond-like carbon film, and thus a design of a continuous manufacturing process is very difficult. Moreover, in the diamond-like carbon film manufactured using the nanostrand layer as a sacrificial layer, there is a problem that removal performance is poor. In fact, the diamond-like carbon film reported in Non Patent Literature 2 has an azobenzene rejecting rate of 94.4% at maximum. Thereafter, Ichinose et al. have considered a variety of additional experiments, but when the nanostrand layer is used as a sacrificial layer, the azobenzene rejection rate never exceeded 95.2%. Various factors are considered as the reason, but it is considered as the most important factor that the surface of the nanostrand layer has low smoothness.

The nanostrand is intrinsically an ultrafine inorganic fiber, the nanostrand layer formed by filtration of the nanostrands is very dense and has pores of 10 nm or less, and thus the nanostrand layer itself can be used as a filtering filter (Patent Literature 2).

However, a terminal or bent portion of the nanostrand protrudes from the surface of the nanostrand layer in some cases, and pores having a size of 1 nm or more are partially formed on the carbon layer when the diamond-like carbon layer is extremely thin. Since the nanostrand is easily dissolved by a weak acid or the like, when the nanostrand protrudes from the surface, a removal trace of the nanostrands reaches the surface. This leads to a decrease in the rejection rate of the diamond-like carbon film.

Moreover, in the case of using the nanostrands as a sacrificial layer, a portion of the nanostrand is etched in the course of the deposition and a composition of plasma varies in the vicinity of the surface of the sacrificial layer when the diamond-like carbon is deposited by a method such as plasma CVD. Thus, pores having a size of 0.95 nm or more are partially formed inside the diamond-like carbon film. Furthermore, in the diamond-like carbon film manufactured using the nanostrands as a sacrificial layer, when the nanostrands are removed, a removal trace of the fiber-like nanostrands are formed on one side of the membrane (Non Patent Literature 2). The presence of the removal trace reduces adhesion with the microfiltration membrane using as a porous support substrate, and thus pores (defects) having a size of 1 nm or more are easily formed inside the diamond-like carbon layer when a pressure is loaded. These effects are greater in a case where a thickness of the diamond-like carbon film to be formed is 100 nm or less, and are particularly greater in a case where the thickness thereof is 35 nm or less.

For this reason, the quality of the diamond-like carbon film is greatly reduced by the sacrificial layer of the nanostrands.

A microfiltration membrane (MF membrane) is one of filtration membranes in which a pore diameter is 10 µm or less and a filtration membrane in which a pore diameter is from 0.05 |nm to 10 µm (from 50 nm to 10000 nm). As other examples of the filtration membranes in which the pore diameter is 10 µm or less, there are a reverse osmosis membrane (RO membrane) in which a pore diameter is 1 nm or less and hydrated sodium ions or chloride ions can be rejected and an ultrafiltration membrane (UF membrane) in which a pore diameter is from 0.001 µm to 0.1 µm (from 1 nm to 100 nm). A filtration membrane in which a pore diameter is 2 nm or less and a rejection rate of ions or salts is as low as approximately 70% is referred to as a nanofiltration membrane (NF membrane).
Patent Literature 3 describes a carbon film laminate and its production.

### Citation List

### Patent Literature

Patent Literature 1: JP 2012-36061 A
Patent Literature 2: WO 2011/016478A
Patent Literature 3: EP-A-1723999

### Non Patent Literature

Non Patent Literature 1: J. R. Hollahan, T. Wydeven, Science, 179, 500-501 (1973)
Non Patent Literature 2: S. Karan, S. Samitsu, X. Peng, K. Kurashima, I. Ichinose, Science, 335, 444-447 (2012)
Non Patent Literature 3: Yoshihisa Fujii, Sadaki Samitsu, Izumi Ichinose, "Future Prospects of Porous Diamond-like Carbon Films", MEMBRANE, 38(5), 200-206 (2013)
Non Patent Literature 4: J. D. Ferry, J. Gen. Physiol., 20, 95-104 (1936)

### Summary of Invention

### Technical Problem

In order to solve the problems of the related arts, the present invention has been made in view of the above circumstances, and an object thereof is to provide a novel NF or RO membrane made of a hard carbon film which have oil resistance and can efficiently separate not only ions in water but also dye molecules in an organic solvent, a filtering filter, a two-layer-bonded-type filtering filter, and methods for manufacturing the same.

### Solution to Problem

The inventors have intensively studied in view of the above circumstances to form a diamond-like carbon film not having a pore size of 0.95 nm or more. In particular, the inventors have aimed to manufacture a diamond-like carbon film having high rejecting performance with respect to organic molecules represented by azobenzene having a molecular size of less than 1 nm or hydrated ions having a diameter of less than 1 nm.

Consequently, the inventors have succeeded in manufacturing a diamond-like carbon film not having a pore size of 0.86 nm or more, which cannot be achieved when a nanostrand layer is used as a sacrificial layer, by using an ultrafiltration membrane having a pore size of 50 nm or less on the surface. Moreover, under appropriate conditions, the inventors have also succeeded in manufacturing a diamond-like carbon film not having a pore size of 0.8 nm or more.

In the course of success in the present invention or from the result of success, several important technical findings have been obtained.

That is, first, in order to obtain the diamond-like carbon film not having a pore size of 0.86 nm or more or 0.8 nm or more, a substrate having a smooth surface is utilized. As long as a substrate has pores (or irregularities) of 50 nm or less on the surface, it is possible to manufacture a diamond-like carbon film having excellent rejecting performance. For example, a spin-coated sugar membrane has a very smooth surface, and it is possible to manufacture a diamond-like carbon film not having pores of 0.86 nm or more even by deposition of diamond-like carbon on the surface of the membrane. In addition, such a diamond-like carbon film can be transferred to the porous substrate without damage of performance as a separation membrane.

Then, when an ultrafiltration membrane is used as a substrate for forming a diamond-like carbon film, it is possible not only to obtain a diamond-like carbon film having excellent separation performance which has not been obtained in the conventional art but also to achieve a continuous film-forming process. Furthermore, it has found that a nanofiltration membrane (NF membrane) or a reverse osmosis membrane (RO membrane) having an outermost layer made of the diamond-like carbon film is very flexible and is also suitable to manufacture a module for use as a filtering filter.

In the present invention made in the light of the findings as described above, for example, the NF membrane or the RO membrane is not limited to the diamond-like carbon film. The diamond-like carbon film of the present invention may be considered to be a hard carbon film in broader sense. The diamond-like carbon is characterized by being hard and having high transparency compared to materials such as graphite or carbon fibers. Here, since the NF or RO membrane performs filtration using pressure difference, the hard condition is important, but the transparency is not a necessary condition.

In the case of no ultra-high pressure condition, a thermodynamically stable carbon state is graphite, and diamond is unstable compared to the graphite. For this reason, a carbon material formed by heating or the like typically includes a developed graphite structure, resulting in becoming black and opaque. However, since an active species such as a radical co-exists as a carbon component in a technique widely used as a method for forming the diamond-like carbon film such as a plasma CVD method or a sputtering method, a membrane containing a large amount of SP³ carbon to be seen in diamond is obtained. As a result, the content of graphite component (or conjugation length of SP² carbon) decreases, and the membrane becomes transparency. In addition, since the membrane contains a large amount of SP³ carbon, a three-dimensional crosslinked structure is formed, and thus the membrane becomes hard. Accordingly, the diamond-like carbon film is said to be a hard carbon film, and a carbon film having high transparency. The diamond-like carbon film of the present invention may be a hard carbon film in broader sense except for being black and opaque. The diamond-like carbon film disclosed in Non Patent Literature 2 has transparency, but is a colored membrane.

Further, the diamond-like carbon film (may be also referred to as a hard carbon film) has been reported in Non Patent Literature 2 which contains nitrogen or silicon and oxygen atoms. The fact that heteroelements are taken into the diamond-like carbon is generally known, and even in the present invention, the diamond-like carbon film (or hard carbon film) includes not only a pure carbon film but also a membrane into which heteroelements are mixed. In particular, the diamond-like carbon film (or hard carbon film) of the present invention contains hydrogen atoms as in a general diamond-like carbon.

The diamond-like carbon film (or hard carbon film) is a hard membrane, but may have flexibility. It is demonstrated that the diamond-like carbon film (or hard carbon film) disclosed in Non Patent Literature 2 is not also broken even when being bent at a radius of curvature of 500 nm or less. Since the diamond-like carbon film (or hard carbon film) of the preset invention is the hard membrane, it is an NF or RO membrane having excellent abrasion resistance or pressure resistance, and Young's modulus can be used herein as an index representing a hard degree as disclosed in Non Patent Literature 2. In the view of the fact that a conventional high-performance NF or RO membrane is manufactured using only a crosslinked polymer or an engineering plastic as a base, a condition is that Young's modulus of a hard range is greater compared to such a polymer material. Specifically, when Young's modulus is 5 GPa or more, the NF or RO membrane may be said to be made of the hard carbon film.

Furthermore, one aspect of the diamond-like carbon film (or hard carbon film) has organic-solvent resistance, and a carbon film not having the organic-solvent resistance is generally classified into a crosslinked polymer membrane such as a plasma polymerization membrane. Determination criteria of a separation membrane resistant to the organic solvent can be conveniently determined by confirmation of the fact that a permeation rate is not greatly reduced (to the extent of 50% or more) in a solvent such as tetrahydrofuran in which a polymer is easily dissolved.

Based on the above findings and general technical premises in this regard, the present invention provides:
A nanofiltration (NF) or reverse osmosis (RO) membrane made of a diamond like carbon film, as defined in claim 1.

A method for manufacturing a nanofiltration (NF) or reverse osmosis (RO) membrane made of a diamond like carbon film as defined in claim 8.

A method for manufacturing a two-layer-bonded-type filtering filter, including the formation of a nanofiltration (NF) or reverse osmosis (RO) membrane made of a diamond like carbon film as defined in claim 11.

Further beneficial embodiments are defined in the dependent claims.

In the following the diamond like carbon film might also be termed hard carbon film.

### Advantageous Effects of Invention

Since the NF or RO membrane made of the hard carbon film according to the present invention is configured such that the thickness is from 5 nm to 50 nm and the pore diameter is less than 0.86 nm, when an organic solution (feed solution) containing an azobenzene dye (a molecular weight: 182.2, a minimum molecular width: 0.69 nm, and an average value of width, height, and length: 0.80 nm) is filtered, the azobenzene dye contained in the feed solution is deposited into the pores of the hard carbon film or on the hard carbon film to the extent of 99% or more, an organic solvent in which the azobenzene dye is less than 1% of an initial concentration is obtained as filtrate, and thus the organic solvent and the azobenzene dye contained in the feed solution can be separated from each other. In addition, a solution in which NaCl is removed 80% or more is obtained as filtrate by filtration of an aqueous NaCl solution (feed solution), while NaCl contained in the feed solution can be concentrated by filtration of the feed solution.

Since the filtering filter according to the present invention is configured such that the NF or RO membrane made of the hard carbon film described above is disposed on one side of the porous support substrate, when an organic solution (feed solution) containing an azobenzene dye (a molecular weight: 182.2, a minimum molecular width: 0.69 nm, and an average value of width, height, and length: 0.80 nm) is filtered using a large pressure difference, the azobenzene dye contained in the feed solution is deposited into the pores of the hard carbon film or on the hard carbon film to the extent of 99% or more, an organic solvent in which the azobenzene dye is less than 1% of an initial concentration is obtained as filtrate, and thus the organic solvent and the azobenzene dye contained in the feed solution can be separated from each other at a high speed.

Since the two-layer-bonded-type filtering filter according to the present invention is the two-layer-bonded-type filtering filter in which the NF or RO membrane made of the hard carbon film described above is bonded to one side of the ultrafiltration membrane and is configured such that the ultrafiltration membrane is formed with the pores having the diameter of from 1 nm to 50 nm on the surface without including the local protrusion of 50 nm or more in the range of 1 µm² on the surface, the thickness of the hard carbon film is 100 nm or less, mechanical strength is increased while high permeability of liquid is achieved, whereby the pressure resistance and the durability of the filtration membrane can be improved. In addition, since the NF or RO membrane made of the hard carbon film is formed on the flexible ultrafiltration membrane, it is easily worked into a filtration module. That is, it can be used as an NF or RO membrane having a fast filtering speed and high durability. In particular, since the removal rate of sodium chloride can be controlled to the extent of 80% or more, it is very convenient for using as an NF membrane resistant to the organic solvent. In addition, by filtration of the organic solution (feed solution) containing the azobenzene dye (a molecular weight: 182.2, a minimum molecular width: 0.69 nm, and an average value of width, height, and length: 0.80 nm), the azobenzene dye contained in the feed solution is deposited into the pores of the hard carbon film or on the hard carbon film to the extent of 99% or more such that the organic solvent not containing the azobenzene dye is obtained as filtrate, and thus the organic solvent and the azobenzene dye contained in the feed solution can be separated from each other.

The method for manufacturing the NF or RO membrane made of the hard carbon film according to the present invention is configured to include a step in which an intermediate layer is formed on one side of the support substrate by the spin coating method, the casting method, the dipping method, or the die coating method, a step in which the support substrate formed with the intermediate layer is placed in a vacuum chamber, an internal pressure of the vacuum chamber is reduced, the temperature of the support substrate is set to be from -20°C to 30°C, and then the hard carbon film is formed on one side of the intermediate layer at the film-forming rate of 50 nm/min or less by the plasma CVD method or the sputtering method, and a step in which the support substrate formed with the hard carbon film is immersed in the water or the aqueous acid solution, and the NF or RO membrane made of the hard carbon film is exfoliated from the support substrate. With this configuration, the intermediate layer having high smoothness and flatness is formed on one side of the support substrate, the hard carbon film is slowly formed on one side of the intermediate layer having the high smoothness and flatness at 30°C or lower under the vacuum atmosphere, and thus the maximum pore diameter of the NF or RO membrane made of the hard carbon film is reduced and variation in pore diameter can be reduced, whereby the pore diameter of the NF or RO membrane made of the hard carbon film can be set to be less than 0.86 nm.

The method for manufacturing the filtering filter according to the present invention is configured such that the NF or RO membrane made of the hard carbon film manufactured by the method for manufacturing the NF or RO membrane made of the hard carbon film described above is disposed on one side of the porous support substrate made of any one porous membrane of the porous organic membrane, the porous inorganic membrane, or the porous metal membrane, whereby the filtering filter is manufactured. With this configuration, permeability or pressure resistance and oil resistance can be easily adjusted.

The method for manufacturing the two-layer-bonded-type filtering filter according to the present invention is configured to include a step in which the ultrafiltration membrane is subjected to the organic solvent washing treatment and the vacuum drying treatment after being prepared such that a surface thereof is formed with pores having a size of from 1 nm to 50 nm without including a local protrusion of 50 nm or more in a range of 1 µm² on the surface, and a step in which the pre-treated ultrafiltration membrane is placed in the vacuum chamber, the internal pressure of the vacuum chamber is reduced, the temperature of the pre-treated ultrafiltration membrane is set to be from -20°C to 30°C, and then the NF or RO membrane made of the hard carbon film is formed on one side of the pre-treated ultrafiltration membrane at the film-forming rate of 50 nm/min or less by the plasma CVD method or the sputtering method. With this configuration, there is no need to repeat the water washing, the pores of the ultrafiltration membrane do not disappear, or cracks do not occur between the pores adjacent to each other. In addition, the NF or RO membrane made of the hard carbon film manufactured by the method for manufacturing the NF or RO membrane made of the hard carbon film described above can be bonded on one side of the pre-treated ultrafiltration membrane having high smoothness and flatness in the step of manufacturing the two-layer-bonded-type filtering filter, whereby it is possible to easily manufacture the two-layer-bonded-type filtering filter obtained in such a manner that the NF or RO membrane made of the hard carbon film having the pore diameter of less than 0.86 nm is bonded to the pre-treated ultrafiltration membrane.

### Brief Description of Drawings

Figs. 1(a) and 1(b) are explanatory diagrams schematically illustrating an example of an NF or RO membrane made of a hard carbon film according to an embodiment of the present invention.
Figs. 2(a) and 2(b) are explanatory diagrams schematically illustrating an example of a filtering filter according to an embodiment of the present invention.
Figs. 3(a) and 3(b) are explanatory diagrams schematically illustrating an example of a two-layer-bonded-type filtering filter according to an embodiment of the present invention.
Fig. 4 is an explanatory diagram illustrating an example of a state at the time of filtration of azobenzene using the filtering filter according to the embodiment of the present invention.
Fig. 5 is an explanatory diagram illustrating an example of a state at the time of filtration of azobenzene using the two-layer-bonded-type filtering filter according to the embodiment of the present invention.
Fig. 6 is an explanatory diagram illustrating an example of a state at the time of filtration of an organic solvent using the two-layer-bonded-type filtering filter according to the embodiment of the present invention.
Fig. 7 is a photograph of a two-layer-bonded-type filtering filter of a diamond-like carbon film directly prepared on a porous PSF membrane.

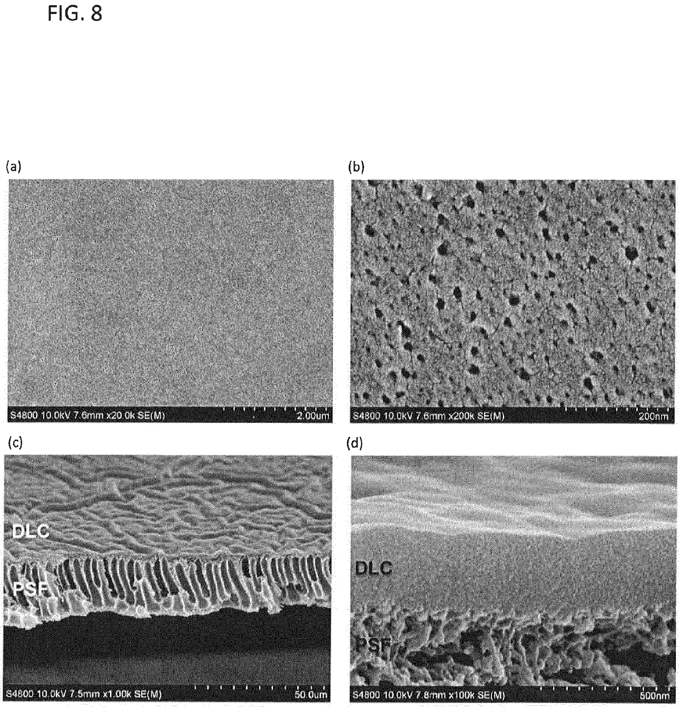

Fig. 8(a) is an electron microphotograph illustrating a surface shape of the porous PSF membrane with a low magnification image, Fig. 8(b) is an electron microphotograph illustrating a surface shape of the porous PSF membrane with a high magnification image, Fig. 8(c) is an electron microphotograph illustrating a cross-section of the two-layer-bonded-type filtering filter of the diamond-like carbon film directly prepared on the porous PSF membrane with a low magnification image, and Fig. 8(d) is an electron microphotograph illustrating a cross-section of the two-layer-bonded-type filtering filter of the diamond-like carbon film directly prepared on the porous PSF membrane with a high magnification image.
Fig. 9 is a graph illustrating separation characteristics of the diamond-like carbon film directly prepared on the porous PSF membrane, and illustrates an ultraviolet/visible absorption spectrum before and after filtration of 0.5 mM azobenzene/ethanol solution.
Fig. 10 is a photograph illustrating an appearance of membranes after a filtration experiment of azobenzene is performed using the porous PSF membrane and the diamond-like carbon film directly prepared on the porous PSF membrane.
Fig. 11 illustrates separation characteristics of the porous PSF membrane, and illustrates an ultraviolet/visible absorption spectrum before and after filtration of 0.5 mM azobenzene/ethanol solution.
Fig. 12 is a photograph illustrating an appearance of the porous PSF membrane and the surface of the porous PSF membrane onto which the diamond-like carbon film is transferred.
Fig. 13 is a graph illustrating separation characteristics of the porous PSF membrane onto the diamond-like carbon film is transferred, and illustrates an ultraviolet/visible absorption spectrum before and after filtration of 0.5 mM azobenzene/ethanol solution.
Fig. 14(a) is an electron microphotograph illustrating the two-layer-bonded-type filtering filter of the diamond-like carbon film directly prepared on the porous PSF membrane and Fig. 14(b) is a high magnification image thereof.
Fig. 15 is a graph illustrating separation characteristics of the diamond-like carbon film directly prepared on the porous PSF membrane, and illustrates an ultraviolet/visible absorption spectrum before and after filtration of 0.5 mM azobenzene/ethanol solution.

### Description of Embodiments

An NF or RO membrane made of a hard carbon film, a filtering filter, a two-layer-bonded-type filtering filter, and a method for manufacturing the same according to an embodiment of the present invention will be described below with reference to the accompanying drawings.

### <NF or RO membrane made of hard carbon film>

First, the NF or RO membrane made of the hard carbon film according to the embodiment of the present invention will be described.

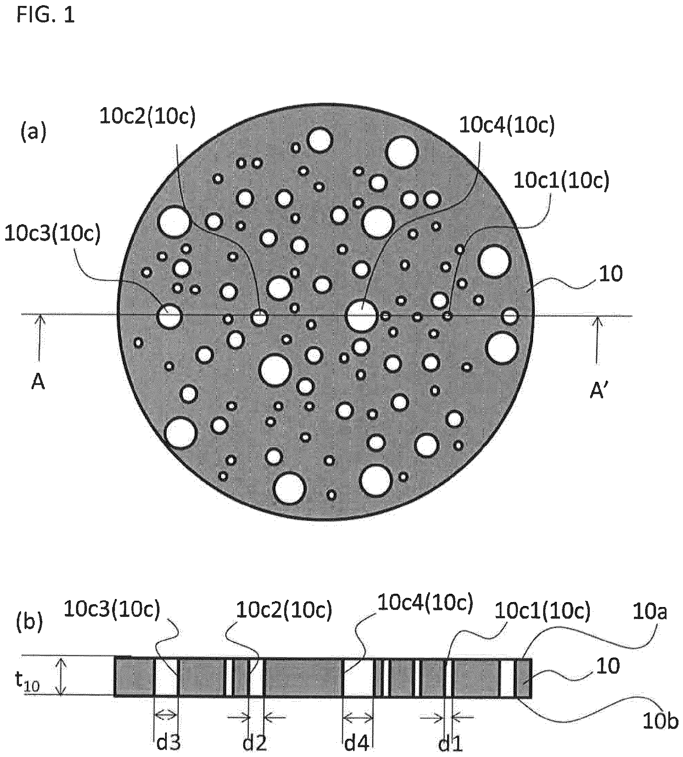

Figs. 1(a) and 1(b) are explanatory diagrams schematically illustrating an example of the NF or RO membrane made of the hard carbon film according to the embodiment of the present invention. Usually, pores having various shapes are formed on the surface of the NF or RO membrane made of the hard carbon film in a plan view, and the pores are simplified and illustrated in a homogeneous cylindrical shape for explanation in Figs. 1(a) and 1(b), but a penetration shape thereof is also not limited to a cylindrical shape.

An NF or RO membrane 10 made of a hard carbon film is, for example, an NF or RO membrane made of a diamond-like carbon (DLC). The hard carbon film is a membrane having high transparency, and the diamond-like carbon film as an example is also a membrane having high transparency. As illustrated in Figs. 1(a) and 1(b), the NF or RO membrane 10 made of the hard carbon film is a porous membrane having a thickness t₁₀ of from 5 nm to 50 nm and provided with a plurality of pores 10c.

The thickness t₁₀ of the NF or RO membrane 10 made of the hard carbon film is in the range of from 5 nm to 50 nm. In particular, the thickness is more preferably in the range of from 10 nm to 50 nm to obtain an NF or RO membrane with high permeation flux made of a hard carbon film.

The NF or RO membrane 10 made of the hard carbon film may contain elements (hydrogen, nitrogen, silicon, and the like) contained in a plasma treated gas. In addition, an elastic modulus (Young's modulus) of the hard carbon film is preferably 5 GPa or more, and is more preferably in the range of from 50 to 300 GPa, whereby a membrane can withstand a pressure of 30 atm or more.

Typically, on the assumption that the NF or RO membrane 10 made of the hard carbon film is formed with the pores having the homogeneous cylindrical shape as illustrated in Figs. 1(a) and 1(b), the size of the pore 10c is less than 0.86 nm in diameter. Thus, an azobenzene dye having a minimum separation width of 0.69 nm can be separated to the extent of 99% or more.

By control of manufacturing conditions, it is also possible to manufacture, as a hard carbon film having smaller pores, a membrane having pores of less than 0.80 nm in diameter.

The pore 10c can be divided into, for example, the following four groups depending on the pore size.

A pore 10c1 is a group having a pore size d1 of less than 0.42 nm, a pore 10c2 is a group having a pore size d2 of 0.42 nm or more but less than 0.66 nm, a pore 10c3 is a group having a pore size d3 of 0.66 nm or more but less than 0.80 nm, and a pore 10c4 is a group having a pore size d4 of 0.80 nm or more but less than 0.86 nm. For example, by the division into the groups having the sizes of these pore sizes d1, d2, d3, and d4, it is possible to selectively separate molecules having the corresponding size.

The maximum diameter of the pores is less than 0.86 nm.

Further, the NF or RO membrane 10 made of the hard carbon film can be utilized as a filtration membrane stable to various organic solvents (methanol, ethanol, chloroform, tetrahyderofuran, benzene, acetonitrile, hexane, and the like) and can be used for separation or purification using these solvents.

In addition, with respect to a filtering filter having the NF or RO membrane made of the hard carbon film, an ultrafiltration membrane resistant to the organic solvent is selected as a substrate thereof, thereby obtaining a filtering filter having excellent resistance to many organic solvents.

### <Filtering filter>

The filtering filter according to the embodiment of the present invention will be described below.

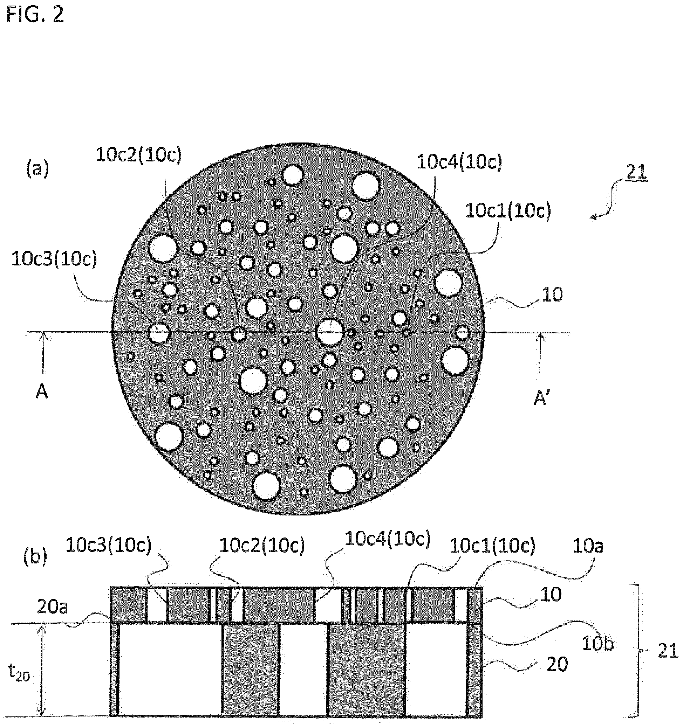

Figs. 2(a) and 2(b) are explanatory diagrams schematically illustrating an example of the filtering filter according to the embodiment of the present invention.

As illustrated in Figs. 2(a) and 2(b), a filtering filter 21 according to the embodiment of the present invention is configured such that the NF or RO membrane 10 made of the hard carbon film according to the embodiment of the present invention is disposed on one side 20a of a porous support substrate 20.

The porous support substrate 20 may include any one porous membrane of a porous organic membrane, a porous inorganic membrane or a porous metal membrane. Specifically, for example, it may include a porous polysulfone (PSF) membrane, a porous alumina film, or a porous aluminum film.

A thickness t₂₀ of the porous support substrate 20 is preferably from 5 µm to 100 µm. In addition, the porous support substrate 20 to be used may be formed on a flexible nonwoven fabric such as polyester, polypropylene, or cellulose. Thus, a very flexible filtering filter can be formed, which can be also suitably used to manufacture a module.

### <Two-layer-bonded-type filtering filter>

The two-layer-bonded-type filtering filter according to the embodiment of the present invention will be described below.

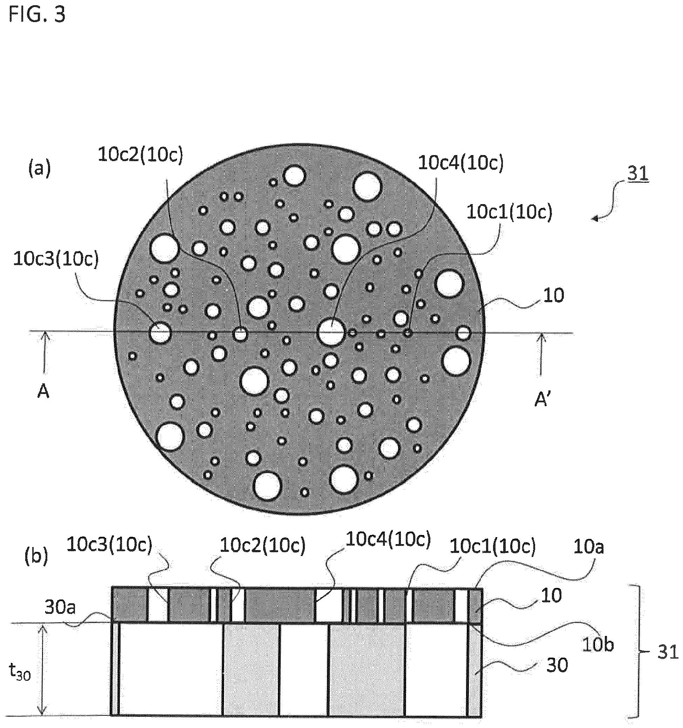

Figs. 3(a) and 3(b) are explanatory diagrams schematically illustrating an example of the two-layer-bonded-type filtering filter according to the embodiment of the present invention.

As illustrated in Figs. 3(a) and 3(b), a two-layer-bonded-type filtering filter 31 according to the embodiment of the present invention is configured such that the NF or RO membrane 10 made of the hard carbon film according to the embodiment of the present invention is bonded to one side 30a of an ultrafiltration membrane 30. The one side 30a of the ultrafiltration membrane 30 is a bonding face of the NF or RO membrane 10 made of the hard carbon film.

As the ultrafiltration membrane 30, a membrane having pores of 50 nm or less on a surface is preferably used. When the diameter of the pores on the surface is 50 nm, a diameter of pores formed inside the membrane can be set to be about 20 nm which is determined from a rejection rate. The ultrafiltration membrane 30 is more preferably a membrane having pores of 30 nm or less on the surface. Thus, the diameter of the pores formed inside the membrane can be set to be smaller.

Generally, when the ultrafiltration membrane is used as a filtering filter, the rejection rate is determined by pores formed on the surface and inside the membrane. The range of the pore size based on the rejection rate is in the range of from 1 nm to 100 nm according to an IUPAC definition.

In the present invention, the diameter of the pores of ultrafiltration membrane 30 corresponds to a circle-equivalent diameter of pores on the bonding face (and in the range of 50 nm from the bonding face) of the NF or RO membrane 10 made of the hard carbon film. With respect to the ultrafiltration membrane, fine pores of 50 nm or more are formed in the inside thereof depending on manufacturing methods thereof, and pores of 1 µm or more are formed in some cases. Even in such cases, the diameter of the pores on the bonding face (and in the range of 50 nm from the bonding face) is preferably 50 nm or less, and there is not particularly a problem even when large pores are formed inside (and one side different from the bonding face of) the ultrafiltration membrane 30.

A thickness t₃₀ of the ultrafiltration membrane 30 is preferably from 5 µm to 100 µm. In addition, the ultrafiltration membrane 30 to be used may be formed on a flexible nonwoven fabric such as polyester, polypropylene, or cellulose. Thus, a very flexible filtering filter can be formed, which can be also suitably used to manufacture a module.

The ultrafiltration membrane 30 is preferably configured such that the surface thereof is formed with pores having the diameter of from 1 nm to 50 nm without including a local protrusion of 50 nm or more in the range of 1 µm² on the surface. By use of the ultrafiltration membrane of which the surface does not include the local protrusion of 50 nm or more in the range of 1 µm², the NF or RO membrane 10 made of the hard carbon film to be formed on the ultrafiltration membrane 30 can be increased in smoothness, and thus pores 10c of the NF or RO membrane 10 made of the hard carbon film can be set to have a diameter of less than 0.86 nm.

In the present invention, the pore diameter of the NF or RO membrane made of the hard carbon film refers to a pore diameter which is evaluated based on rejecting performance. That is, the NF or RO membrane made of the hard carbon film according to the present invention may include pores having a maximum diameter of 0.86 nm or more as long as not to affect the rejection rate.

A material of the ultrafiltration membrane 30 is not particularly limited, but is preferably a polymer and is more preferably an engineering plastic having high mechanical strength and heat resistance. Examples may include polysulfone, polyethersulfone, polyimide, polyamide, or polyether ether ketone. The reason why the heat resistance is required is that there is a tendency that a local temperature of the surface of the ultrafiltration membrane rises in a step of forming the hard carbon film and the pores on the surface are closed when a film-forming rate is fast in particular. In order to prevent this, an engineering plastic subjected to a surface tension reducing treatment or an engineering plastic subjected to a crosslinking treatment is preferably used as the material of the ultrafiltration membrane.

An area of the pores on the surface (area ratio of open pores: pore ratio) of the ultrafiltration membrane 30 is preferably 10% or more. When the area ratio of open pores is 10% or more, a filtration procedure can be performed in a short time.

The ultrafiltration membrane 30 is preferably a porous organic membrane. Thus, a flexible filtering filter can be formed. An example of the porous organic membrane can be suitably a polysulfone (PSF) membrane.

The ultrafiltration membrane described above can be manufactured using a general method such as a non-solvent phase inversion method. In the non-solvent phase inversion method, an asymmetric membrane is generally obtained, larger pores are formed on one side of the ultrafiltration membrane, and the size of the pores is 50 nm or more in some cases. In these cases, the NF or RO membrane made of the hard carbon film is formed on a side of the ultrafiltration membrane having the pores of 50 nm or less in the present invention.

The two-layer-bonded-type filtering filter 31 according to the embodiment of the present invention can be used as a laminated-type multilayer filtering filter obtained by lamination of another layer in addition to the NF or RO membrane 10 made of the hard carbon film and the ultrafiltration membrane 30. For example, the two-layer-bonded-type filtering filter of the present invention has higher strength and is improved in pressure resistance and workability when being manufactured on a cellulose filtering filter having pores of several 10 µm.

### <Method for manufacturing the NF or RO membrane made of the hard carbon film>

The method for manufacturing the NF or RO membrane made of the hard carbon film according to the embodiment of the present invention will be described below.

The method for manufacturing the NF or RO membrane made of the hard carbon film according to the embodiment of the present invention includes step S1 of forming an intermediate layer, step S2 of forming a hard carbon film, and step S3 of exfoliating a hard carbon film.

### (Step S1 of forming the intermediate layer)

In this step, the intermediate layer is formed on one side of the support substrate by, for example, a spin coating method, a casting method, a dipping method, or a die coating method.

An example of the support substrate may be suitably silicon or glass. By use of such a support substrate having a smooth surface, a smooth intermediate layer can be formed.

The intermediate layer is a membrane made of any one material selected from the group consisting of glucose, sucrose, a glucose/sucrose mixture, and glycerin. By use of these materials, the intermediate layer can be formed with a smooth surface without including a local protrusion of 50 nm or more in the range of 1 µm² on the surface.

### (Step S2 of forming the hard carbon film)

In this step, the support substrate formed with the intermediate layer is placed in a vacuum chamber, an internal pressure of the vacuum chamber is reduced, a temperature of the support substrate is set to be from -20°C to 30°C, and then a hard carbon film is formed on one side of the intermediate layer at a film-forming rate of 50 nm/min or less by a plasma CVD method or a sputtering method.

The hard carbon film is manufactured using, for example, a high-frequency plasma apparatus in the plasma CVD method.

The high-frequency plasma apparatus is schematically configured to include a chamber, a pipe, electrode portions, and a gas introduction pipe. The upper and lower electrode portions function as a pair of electrode portions, and are configured such that an electric field can be applied therebetween. The lower electrode portion also has a function of holding the substrate. The gas introduction pipe is connected to a gas supply portion (not illustrated) and is used as a gas introduction pipe through which a gas stored in the gas supply portion is introduced into the chamber. The pipe is connected to a vacuum pump, thereby enabling reducing the internal pressure of the chamber to a predetermined vacuum degree, and is also used as a gas discharge pipe through which the gas introduced into the chamber is discharged.

First, the support substrate formed with the intermediate layer is attached to the electrode portions in the chamber such that the surface of the intermediate layer is an irradiation surface of the plasma CVD. Next, the internal pressure of the chamber is reduced to a predetermined vacuum degree, and a gas containing an organic compound is introduced into the chamber from the gas supply portion.

The organic compound is preferably an organic compound having a vapor pressure of 8 Pa or more within the range of 10°C around a room temperature. The organic compound may include not only a hydrocarbon but also oxygen, nitrogen, silicon, phosphorus, boron, and other elements.

Examples of the organic compound are not particularly limited, and may include an organic compound selected from the group consisting of acetylene, butadiene, pyridine, benzene, hexafluoro benzene, cyclohexane, hexamethyldisiloxane, 4-vinylpyridine, propylamine, and allylamine.

The organic compound may be introduced into the chamber as a single gas after being in a gas state, and may be introduced into the chamber as a gas mixed with other organic compounds or an inert gas. For example, a high-reactivity gas such as acetylene or butadiene is preferably introduced by a mixture with an argon gas.

In addition, since hard carbon films having different fine pore sizes, mechanical properties, or chemical properties are obtained by selection of organic compounds or film-forming conditions, it is possible to control properties of the filtering filter by lamination of the different hard carbon films.

In the case of using a liquid such as hexamethyldisiloxane having a relatively high boiling point, a pressure reducing container is provided outside the chamber to gasify the liquid, and the liquid may be introduced as a gas after a pressure is set to 8 Pa or more in the pressure reducing container.

The hard carbon film may be manufactured using a general sputtering apparatus in the sputtering method.

The sputtering apparatus is schematically configured to include a chamber, a pipe, and a target portion. In addition, a mode of sputtering may include, for example, an arc discharge method, a magnetron method, and an ion assist method, and these methods may be used singly or in combination. Amorphous carbon or graphite is generally used as the target, but the target may contain not only a carbon element but also other elements such as phosphorus, boron, oxygen, nitrogen, or silicon. Moreover, in order to adjust a concentration, a composition, or a temperature of atoms, ions, clusters, plasma, or the like emitted from the target, an inert gas such as argon or a gaseous organic substance such as methane, ethane, or pyridine may be introduced into the chamber. The ionized atoms, molecules, or clusters caused by the sputtering can be also induced to the support substrate using an electric field or the like. These methods are widely known as a general technique of the sputtering.

The plasma CVD method and the sputtering method are different from each other in a method of introducing a carbon component mainly used to form the hard carbon film. Even in either case however, the carbon component can exist in a state of radical species, ion species, or cluster species in the formation of the hard carbon film, and adsorption and reaction of such a component occur on one side of the support substrate, whereby the hard carbon film grows. For this reason, the similar hard carbon film is obtained as a result.

In order to mainly introduce the carbon component forming the hard carbon film as gas species in the plasma CVD method, acetylene, propylamine, or the like is used as the gas species, and thus the hard carbon film is easily formed in the presence of hydrogen or nitrogen. As a result, compared to the sputtering method, the hard carbon film is easily controlled in hydrophilicity or flexibility. However, even in the sputtering method, it is possible to control hydrophilicity or flexibility of the hard carbon film by selection of target species or an internal atmosphere of the chamber.

In the formation of the hard carbon film by the plasma CVD method, an electric field is applied between upper and lower electrode portions in a state the gas containing the organic compound is circulated inside the chamber, and thus high-frequency plasma is generated between the electrode portions.

Film-forming conditions are that a temperature of the substrate is from -20°C to 30°C and a film-forming rate is 50 nm/min or less. With the film-forming conditions, smoothness of the hard carbon film can be enhanced, and the pore diameter of the hard carbon film can be set to be less than 0.86 nm.

Other film-forming conditions are not particularly limited, but are set with the range that, for example, an output is from 2 to 100 W, a pressure is from 1 to 8 Pa, and a film-forming time is from 1 to 3600 seconds. With the film-forming conditions, the gas containing the organic compound is subjected to a plasma treatment, and thus a hard carbon film having a thickness of from 5 nm to 50 nm can be formed.

In the formation of the hard carbon film by the sputtering method, as in the plasma CVD method, a temperature of the substrate is from -20°C to 30°C and a film-forming rate is 50 nm/min or less. When the film-forming rate is large, a surface temperature of the hard carbon film rises. In such a case, the temperature of the substrate is set to be lower, and thus it is preferred to suppress the rising of the surface temperature. With the film-forming conditions, a smooth hard carbon film can be obtained and the pore diameter of the hard carbon film can be set to be less than 0.86 nm.

Other film-forming conditions are not particularly limited, and are that a pressure is preferably 1 Pa or less and a film-forming time is preferably from 1 to 7200 seconds. With the film-forming conditions, a hard carbon film having a thickness of from 5 nm to 50 nm can be formed.

### (Step S3 of exfoliating the hard carbon film)

In this step, the support substrate formed with the hard carbon film is immersed in water or aqueous acid solution, the intermediate layer is eluted, and the NF or RO membrane made of the hard carbon film is exfoliated from the support substrate.

### <Method for manufacturing the filtering filter>

The method for manufacturing the filtering filter according to the embodiment of the present invention will be described below.

In the method for manufacturing the filtering filter according to the embodiment of the present invention, the hard carbon film manufactured by the method for manufacturing the NF or RO membrane made of the hard carbon film described above is disposed on one side of the porous support substrate made of any one porous membrane of the porous organic membrane, the porous inorganic membrane, or the porous metal membrane, whereby the filtering filter is manufactured.

In the water or the aqueous acid solution, the NF or RO membrane made of the hard carbon film, which is exfoliated by the method for manufacturing the NF or RO membrane made of the hard carbon film described above, is gently disposed on one side of the porous support substrate, whereby the filtering filter can be easily manufactured.

### <Method for manufacturing the two-layer-bonded-type filtering filter>

The method for manufacturing the two-layer-bonded-type filtering filter according to the embodiment of the present invention will be described below.

The method for manufacturing the two-layer-bonded-type filtering filter according to the embodiment of the present invention includes a pre-treatment step S11 and a hard carbon film forming step S12.

### (Pre-treatment step S11)

In this step, an ultrafiltration membrane is subjected to a pre-treatment of an organic solvent washing treatment and a vacuum drying treatment after being prepared such that a surface thereof is formed with pores having a diameter of from 1 nm to 50 nm without including a local protrusion of 50 nm or more in a range of 1 µm² on the surface.

### (Hard carbon film forming step S12)

In this step, the pre-treated ultrafiltration membrane is placed in a vacuum chamber, an internal pressure of the vacuum chamber is reduced, a temperature of the pre-treated ultrafiltration membrane is set to be from -20°C to 30°C, and then a hard carbon film is formed on one side of the pre-treated ultrafiltration membrane at a film-forming rate of 50 nm/min or less by a plasma CVD method or a sputtering method.

As other film-forming conditions, it is possible to select the same conditions as in the hard carbon film forming step S2.

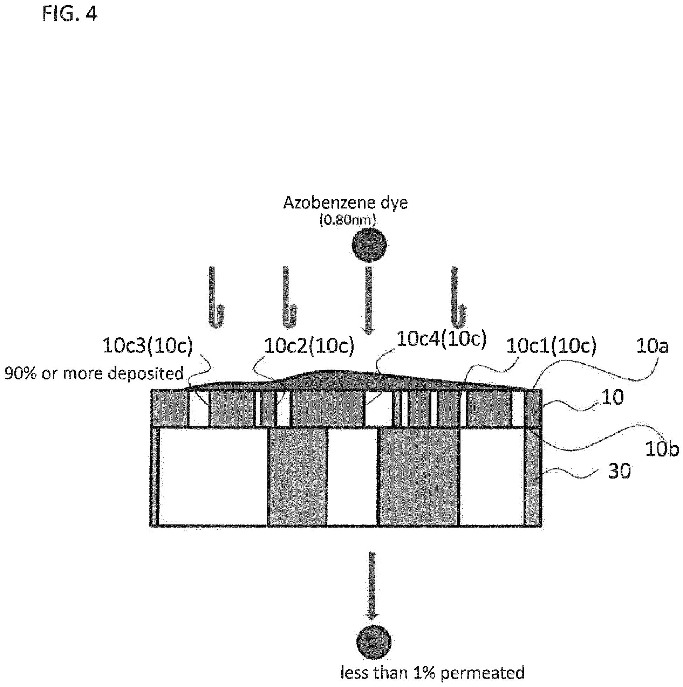

Fig. 4 is an explanatory diagram illustrating an example of a state in which azobenzene is filtered using the filtering filter 21 according to the embodiment of the present invention.

The diameter of the pores 10c of the NF or RO membrane 10 made of the hard carbon film is less than 0.86 nm. Thus, as illustrated in Fig. 4, an azobenzene dye having a molecular size of 0.80 nm does not permeate into the NF or RO membrane 10 made of the hard carbon film, and can be separated to the extent of 99% or more from a solvent.

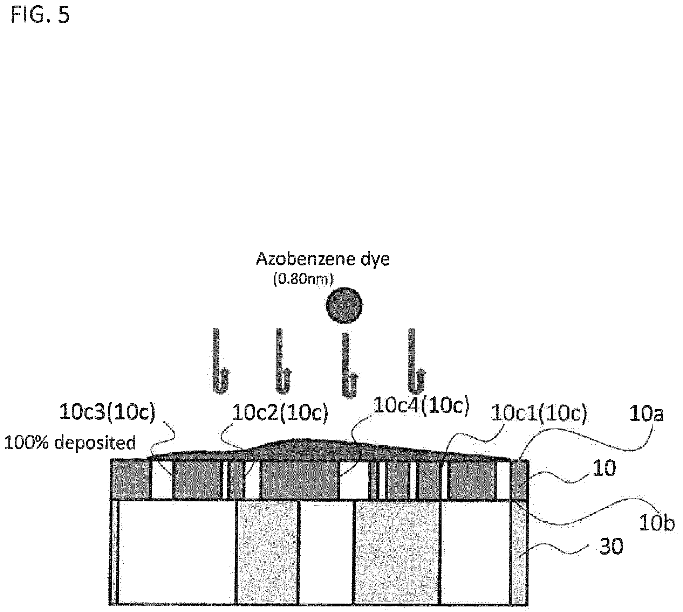

Fig. 5 is an explanatory diagram illustrating an example of a state in which azobenzene is filtered using the two-layer-bonded-type filtering filter 31 according to the embodiment of the present invention.

The diameter of the pores 10c of the NF or RO membrane 10 made of the hard carbon film is less than 0.86 nm. Thus, as illustrated in Fig. 5, an azobenzene dye having a molecular size of 0.80 nm does not permeate into the NF or RO membrane 10 made of the hard carbon film, and can be separated to the extent of 99% or more from a solvent.

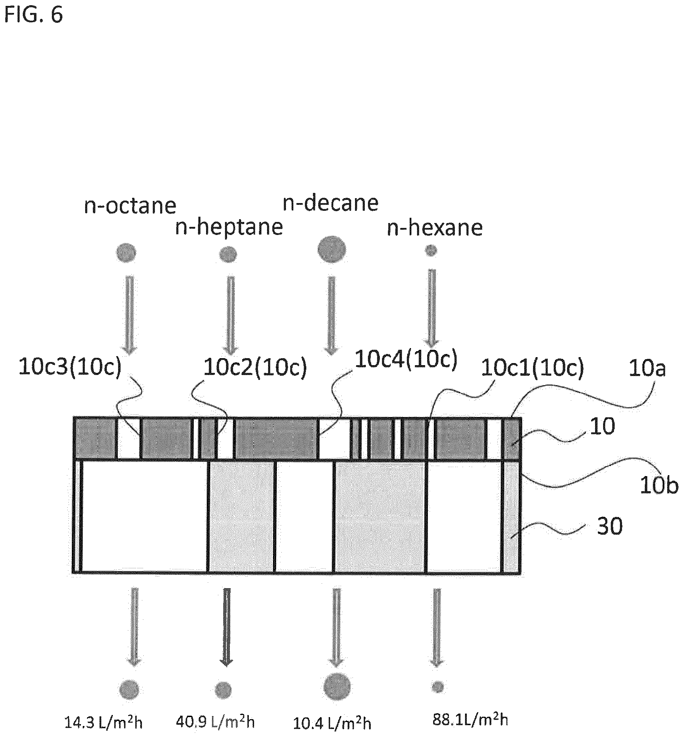

Fig. 6 is an explanatory diagram illustrating an example of a state in which an organic solvent is filtered using the two-layer-bonded-type filtering filter 31 according to the embodiment of the present invention.

As illustrated in Fig. 6, the pores 10c of the NF or RO membrane 10 made of the hard carbon film are grouped by the pore diameter described above. Thus, when the organic solvents having substantially the same conformation permeate, the difference in flux is caused due to the difference in molecular size.

Since the NF or RO membrane 10 made of the hard carbon film according to the embodiment of the present invention is configured such that the thickness t₁₀ is from 5 nm to 50 nm and the pore diameter is less than 0.86 nm, when an organic solution (feed solution) containing an azobenzene dye (a molecular weight: 182.2, a molecular width: 0.69 nm, and an average value of width, height, and length: 0.80 nm) is filtered, the azobenzene dye contained in the feed solution is deposited into the pores of the hard carbon film or on the hard carbon film to the extent of 99% or more, an organic solvent in which the azobenzene dye is less than 1% of an initial concentration is obtained as filtrate, and thus the organic solvent and the azobenzene dye contained in the feed solution can be separated from each other. In addition, a solution in which NaCl is removed 80% or more is obtained as filtrate by filtration of an aqueous NaCl solution (feed solution), while NaCl contained in the feed solution can be concentrated by filtration of the feed solution.

Since the filtering filter 21 according to the embodiment of the present invention is configured such that the hard carbon film 10 is disposed on one side 20a of the porous support substrate 20, when an organic solution (feed solution) containing an azobenzene dye (a molecular weight: 182.2, a molecular width: 0.69 nm, and an average value of width, height, and length: 0.80 nm) is filtered using a large pressure difference, the azobenzene dye contained in the feed solution is deposited into the pores of the hard carbon film or on the hard carbon film to the extent of 99% or more, an organic solvent in which the azobenzene dye is less than 1% of an initial concentration is obtained as filtrate, and thus the organic solvent and the azobenzene dye contained in the feed solution can be separated from each other at a high speed.

Since the two-layer-bonded-type filtering filter 31 according to the embodiment of the present invention is the two-layer-bonded-type filtering filter in which the hard carbon film 10 is bonded to one side 30a of the ultrafiltration membrane 30 and is configured such that the ultrafiltration membrane 30 is formed with the pores having the diameter of from 1 nm to 50 nm on the surface without including the local protrusion of 50 nm or more in the range of 1 µm² on the surface, the thickness of the hard carbon film is 50 nm or less, but since the hard carbon film is formed on the ultrafiltration membrane having pores of 50 nm or less on the surface, mechanical strength is increased while high permeability of liquid is achieved, whereby the pressure resistance and the durability of the filtration membrane can be improved. In addition, since the hard carbon film is formed on the flexible ultrafiltration membrane, it is easily worked into a filtration module. That is, it can be used as an NF or RO membrane having a fast filtering speed and high durability. In particular, since the removal rate of sodium chloride can be controlled to the extent of 80% or more, it is very convenient for using as an NF membrane resistant to the organic solvent. In addition, by filtration of the organic solution (feed solution) containing the azobenzene dye (a molecular weight: 182.2, a molecular width: 0.69 nm, and an average value of width, height, and length: 0.80 nm), the azobenzene dye contained in the feed solution is deposited into the pores of the hard carbon film or on the hard carbon film to the extent of 99% or more such that the organic solvent not containing the azobenzene dye is obtained as filtrate, and thus the organic solvent and the azobenzene dye contained in the feed solution can be separated from each other.

Since the two-layer-bonded-type filtering filter 31 according to the embodiment of the present invention is configured such that the ultrafiltration membrane is the porous organic membrane, a defect-free hard carbon film (may be a diamond-like carbon film having higher transparency) is be formed, so that a pore diameter can be set to be less than 0.86 nm.

Since the two-layer-bonded-type filtering filter 31 according to the embodiment of the present invention is configured such that the porous organic membrane is preferably a polysulfone (PSF) membrane, a hard carbon film being free of defects and having excellent adhesion with the ultrafiltration membrane serving as the porous support substrate is formed, so that a pore diameter can be set to be less than 0.86 nm.

The method for manufacturing the NF or RO membrane 10 made of the hard carbon film according to the embodiment of the present invention is configured to include step S1 in which the intermediate layer is formed on one side of the support substrate by, for example, the spin coating method, the casting method, the dipping method, or the die coating method, step S2 in which the support substrate formed with the intermediate layer is placed in a vacuum chamber, an internal pressure of the vacuum chamber is reduced, the temperature of the support substrate is set to be from -20°C to 30°C, and then the hard carbon film is formed on one side of the intermediate layer at the film-forming rate of 50 nm/min or less by the plasma CVD method or the sputtering method under, and step S3 in which the support substrate formed with the hard carbon film is immersed in the water or the aqueous acid solution, and the hard carbon film is exfoliated from the support substrate. With this configuration, the intermediate layer having high smoothness and flatness is formed on one side of the support substrate, the hard carbon film is formed on one side of the intermediate layer having the high smoothness and flatness at around the room temperature under the reduced pressure, and thus the maximum pore diameter of the hard carbon film is reduced and variation in pore diameter can be reduced, whereby the pore diameter of the hard carbon film can be set to be less than 0.86 nm.

Since the method for manufacturing the NF or RO membrane 10 made of the hard carbon film according to the embodiment of the present invention is configured such that the intermediate layer is a membrane made of any one material selected from the group consisting of glucose, sucrose, a glucose/sucrose mixture, and glycerin, the hard carbon film having high smoothness and flatness is formed, and thus the pore diameter can be set to be less than 0.86 nm, whereby the hard carbon film can be easily exfoliated.

Since the method for manufacturing the NF or RO membrane 10 made of the hard carbon film according to the embodiment of the present invention is configured such that the support substrate is suitably silicon or glass, the hard carbon film having high smoothness and flatness is formed in a wide range, and thus the pore diameter can be set to be less than 0.86 nm, whereby the hard carbon film can be easily exfoliated.

The method for manufacturing the filtering filter 21 according to the embodiment of the present invention is configured such that the NF or RO membrane 10 made of the hard carbon film manufactured by the method for manufacturing the NF or RO membrane made of the hard carbon film is disposed on one side of the porous support substrate made of any one porous membrane of the porous organic membrane, the porous inorganic membrane, or the porous metal membrane, whereby the filtering filter 21 is manufactured. With this configuration, it is possible to improve the pressure resistance of the filtering filter without impairing separation performance of the NF or RO membrane made of the hard carbon film having the pore size of less than 0.86 nm.

The method for manufacturing the two-layer-bonded-type filtering filter 31 according to the embodiment of the present invention is configured to include step S11 in which the ultrafiltration membrane is subjected to the pre-treatment of the organic solvent washing treatment and the vacuum drying treatment after being prepared such that a surface thereof is formed with pores having a size of from 1 nm to 50 nm without including a local protrusion of 50 nm or more in a range of 1 µm² on the surface, and step S12 in which the pre-treated ultrafiltration membrane is placed in the vacuum chamber, the internal pressure of the vacuum chamber is reduced, the temperature of the pre-treated ultrafiltration membrane is set to be from -20°C to 30°C, and then the hard carbon film is formed on one side of the pre-treated ultrafiltration membrane at the film-forming rate of 50 nm/min or less by the plasma CVD method or the sputtering method. With this configuration, the ultrafiltration membrane pre-treated in the state where the pores are held can be prepared in the pre-treatment step of performing the organic solvent washing, and the hard carbon film can be formed on one side of the pre-treated ultrafiltration membrane having high smoothness and flatness in the step of manufacturing the two-layer-bonded-type filtering filter, whereby it is possible to easily manufacture the two-layer-bonded-type filtering filter obtained in such a manner that the NF or RO membrane made of the hard carbon film having the pore size of less than 0.86 nm is bonded to the pre-treated ultrafiltration membrane.

### [Examples]

### (Test Example 1)

### <Preparation of porous PSF membrane>

First, polysulfone (PSF) (Udel polysulfone P-1700 produced by Solvay Advanced Polymers) of 7.5 g was added to N, N-dimethylacetamide (special grade produced by Wako Pure Chemical Industries, Ltd.) of 42.5 g, and was then stirred for 6 hours at a room temperature, thereby preparing a casting solution in which a concentration of a polymer was 15 wt%.

Next, the casting solution was dropped on a silicon substrate (2 inches) after being subjected to a defoaming treatment while being held in a vacuum for 5 minutes, and was then uniformly coated by spin-coating for 2 seconds at the rotation rate of 2000 rpm.

Then, this substrate was quickly immersed in purified water under a room temperature, whereby a flexible polysulfone porous sheet (porous PSF membrane) (Test Example 1-1) was prepared by a non-solvent induced phase inversion method, as a substrate of a carbon filtering filter.

Subsequently, porous PSF membranes according to Test Example 1-2 and Test Example 1-3 were also prepared under the same conditions.

### <Evaluation of porous PSF membrane>

A flux of water through the porous PSF membrane was 2300 L/m²h at a suction condition of -80 kPa, and a standard deviation thereof was 350 L/m²h when a plurality of permeation experiments were performed (Test Example 1-1).

In addition, a cut-off molecular weight was measured using a refractive index meter. The cut-off molecular weight of the porous PSF membrane, which was evaluated using dextran, was 200 k (Test Example 1-1), 190 k (Test Example 1-2), or 210 k (Test Example 1-3).

In addition, the thickness of the porous PSF membrane was 20 µm (Test Example 1-1), 15 µm (Test Example 1-2), or 25 µm (Test Example 1-3).

Table 1 indicates evaluation results of the porous PSF membranes (Test Examples 1-1 to 1-3).

**[Table 1]**

| Test Examples | Types | Thickness (µm) | Flux of ethanol (L/m²h) Suction condition: -80 kPa | Standard deviation (L/m²h) Suction condition: -80 kPa | Cut-off molecular weight (k) |
|---|---|---|---|---|---|
| Test Example 1-1 | Porous PSF membrane | 20 | 2300 | 350 | 200 |
| Test Example 1-2 | Porous PSF membrane | 15 | - | - | 190 |
| Test Example 1-3 | Porous PSF membrane | 25 | - | - | 210 |

### (Example 1)

### <Preparation of two-layer-bonded-type filtering filter made of porous PSF membrane/diamond-like carbon film (1)>

First, the porous PSF membrane prepared in Test Example 1-1 was placed at a predetermined position in a chamber of a plasma CVD apparatus.

Then, after the internal pressure of the chamber was reduced, diamond-like carbon was directly deposited on the porous PSF membrane using propylamine as a source gas for a film-forming time of 2 minutes at a film-forming temperature of a room temperature (25°C), based on a plasma CVD method, whereby a two-layer-bonded-type filtering filter (Example 1-1) made of porous PSF membrane/diamond-like carbon film was prepared.

Then, a two-layer-bonded-type filtering filter (Example 1-2) was prepared in the same manner as in Example 1-1 except that a film-forming time was 30 minutes.

Next, a two-layer-bonded-type filtering filter (Example 1-3) was prepared in the same manner as in Example 1-1 except that a film-forming time was 60 minutes.

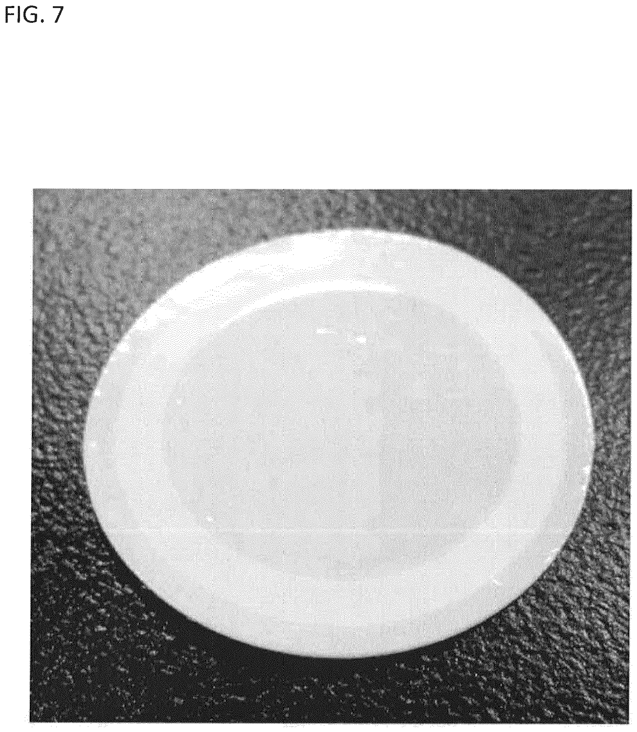

Fig. 7 is a photograph of the two-layer-bonded-type filtering filter (Example 1-3) made of the porous PSF membrane/diamond-like carbon film. Since a metal ring was used to fix the porous PSF membrane, an exposed portion of the porous PSF membrane was formed. A white ring-shaped portion is the exposed portion of the porous PSF membrane, and a faint yellow transparent membrane portion is the diamond-like carbon film.

In addition, Fig. 8(a) is an electron microphotograph illustrating a surface shape of the porous PSF membrane with a low magnification image, Fig. 8(b) is an electron microphotograph illustrating a surface shape of the porous PSF membrane with a high magnification image, Fig. 8(c) is an electron microphotograph at a low magnification illustrating a cross-section of the two-layer-bonded-type filtering filter of the diamond-like carbon film directly prepared on the porous PSF membrane, and Fig. 8(d) is an electron microphotograph at a high magnification illustrating a cross-section of the two-layer-bonded-type filtering filter of the diamond-like carbon film directly prepared on the porous PSF membrane.

The surface of the porous PSF membrane is smooth over a wide range, and does not include a local protrusion of 50 nm or more at least in the range of 1 µm². In addition, the surface includes pores being in the range of from 1 to 50 nm. When the diamond-like carbon film is formed on the porous PSF membrane, all of the pores being in the range of from 1 to 50 nm are covered with the diamond-like carbon film. Moreover, from the observation with the high magnification, it can be confirmed that the porous PSF membrane and the diamond-like carbon film come in closely contact with each other very well.

The thickness of the diamond-like carbon film deposited on the porous PSF membrane was calculated by measuring the thickness of the deposited layer on a silicon substrate placed in the chamber along with the porous PSF membrane using ellipsometry measurement.

The thickness of the diamond-like carbon film was 10 nm (Example 1-1), 150 nm (Example 1-2), or 300 nm (Example 1-3), and it could be confirmed that the thickness could be controlled by a deposition time.

### (Example 2)

A two-layer-bonded-type filtering filter (Example 2-1) made of porous PSF membrane/diamond-like carbon film was prepared in the same manner as in Example 1 except that a film-forming temperature was -20°C.

Then, a two-layer-bonded-type filtering filter (Example 2-2) was prepared in the same manner as in Example 2-1 except that a film-forming time was 30 minutes.

Then, a two-layer-bonded-type filtering filter (Example 2-3) was prepared in the same manner as in Example 2-1 except that a film-forming time was 60 minutes.

The thickness of the diamond-like carbon film was 10 nm (Example 2-1), 150 nm (Example 2-2), or 300 nm (Example 2-3).

Table 2 indicates preparation conditions and the thickness of the two-layer-bonded-type filtering filters (Examples 1-1 to 2-3).

**[Table 2]**

| Example No. | Film formation | First layer | Second layer | Film-forming temperature of DLC film (°C) | Film-forming time of DLC film (min) | Thickness (µm) | |
|---|---|---|---|---|---|---|---|
| Example 1-1 | Two-layer-bonded-type filtering filter | Porous PSF membrane of Test Example 1 | DLC film | 25 | 2 | 10 | |
| Example 1-2 | Two-layer-bonded-type filtering filter | Porous PSF membrane of Test Example 1 | DLC film | 25 | 30 | 150 | * |
| Example 1-3 | Two-tayer-bonded-type filtering filter | Porous PSF membrane of Test Example 1 | DLC film | 25 | 60 | 300 | * |
| Example 2-1 | Two-layer-bonded-type filtering filter | Porous PSF membrane of Test Example 1 | DLC film | -20 | 2 | 10 | |
| Example 2-2 | Two-layer-bonded-type filtering filter | Porous PSF membrane of Test Example 1 | DLC film | -20 | 30 | 150 | * |
| Example 2-3 | Two-layer-bonded-type filtering filter | Porous PSF membrane of Test Example 1 | DLC film | -20 | 60 | 300 | * |

| | | | | | | | |
|---|---|---|---|---|---|---|---|
| * comparative | | | | | | | |

In order to elucidate mechanical properties of these diamond-like carbon films, a diamond-like carbon film was prepared on a polyimide sheet under the same conditions as in Examples 1-2 and 1-3, and Young's modulus (elastic modulus) was measured by a dynamic viscoelasticity measuring method. The Young's modulus is also measured by another method such as a buckling method, but this method needs many assumptions for analysis and thus cannot be used for substances having originally an unclear Poisson's ratio. Meanwhile, the dynamic viscoelasticity measuring method is hard to measure an extremely thin membrane, but can perform measurement with high accuracy as long as the thickness of the membrane is 100 nm or more.

The diamond-like carbon films respectively having 150 nm (corresponding to Example 1-2) and 300 nm (corresponding to Example 1-3) had Young's modulus of 58.3 GPa and 58.9 GPa, respectively, which were results measured using the dynamic viscoelasticity measuring method. These results indicate that diamond-like carbon films (or hard carbon films) are formed by the film-forming method according to the present Examples.

A conventional high-performance NF or RO membrane is manufactured with a cross-linked polymer or an engineering plastic having the Young's modulus of 5 GPa or less, and the membranes according to the present Examples are hard about 10 times compared to the conventional membrane.

### <Evaluation of liquid permeability of two-layer-bonded-type filtering filter made of porous PSF membrane/diamond-like carbon film (1)>

Next, liquid permeability of the two-layer-bonded-type filtering filters (Examples 1-1 and 2-3) made of the porous PSF membrane/diamond-like carbon film was examined.

Either of an organic solvent (ethanol) or water permeated into both of the two-layer-bonded-type filtering filters (Examples 1-1 and 2-3) made of the porous PSF membrane/diamond-like carbon film.

Then, for Example 1, the flux was evaluated under the suction condition of -80 kPa.

The flux of ethanol was 3.5 L/m²h (two-layer-bonded-type filtering filter (Example 1-1)).

Meanwhile, the flux of water was 2.2 L/m²h (two-layer-bonded-type filtering filter (Example 1-1)).

Table 3 indicates summarization of evaluation results of liquid permeability and viscosity η of the two-layer-bonded-type filtering filter (Example 1-1).

As indicated in Table 3, with respect to the two-layer-bonded-type filtering filter (Example 1-1), the flux of ethanol was greater than the flux of water. From this, it is considered that a flow path of the carbon film is a hydrophobic gap.

**[Table 3]**

| Types | Molecular formula | flux / L·m⁻²·h⁻¹ | *η* @25°C/mPas |
|---|---|---|---|
| *Ethanol* | *C₂H₆O* | 3.5 | 1.105 |
| *Water* | *H₂O* | 2.2 | 0.890 |

Similarly, for Example 2, the flux was evaluated under the suction condition of -80 kPa.

The flux of ethanol was 3.4 L/m²h (two-layer-bonded-type filtering filter (Example 2-3)).

Meanwhile, the flux of water was 0.7 L/m²h (two-layer-bonded-type filtering filter (Example 2-3)).

Even with respect to Example 2, the flux of ethanol was greater than the flux of water. From this, it is considered that a flow path of the carbon film is a hydrophobic gap.

Table 4 indicates evaluation results of liquid permeability of the two-layer-bonded-type filtering filters (Examples 1-1 and 2-3).

**[Table 4]**

| **Test No./Example No. Types** | | Evaluation of liquid permeability (1) | |
|---|---|---|---|
| | | Flux of ethanol (L/m²h) | Flux of water (L/m²h) |
| | | Suction condition: -80 kPa | Suction condition: -80 kPa |
| Test Example 1 | Porous PSF membrane | - | - |
| Example 1-1 | Two-layer-bonded -type filtering filter | 3.5 | 2.2 |
| Example 2-3 | Two-layer-bonded-type filtering filter | 3.4 | 0.7 |

### <Evaluation of liquid permeability of two-layer-bonded-type filtering filter made of porous PSF membrane/diamond-like carbon film (2)>

Alkanes (n-hexane, n-heptane, n-octane, n-decane, and cyclohexane) having different molecular sizes as a feed solution were filtered by the two-layer-bonded-type filtering filter (Example 1-1) made of the porous PSF membrane/diamond-like carbon film, fluxes were measured under a suction condition of -80 kPa, and thus permeability of the two-layer-bonded-type filtering filter (Example 1-1) made of the porous PSF membrane/diamond-like carbon film was examined.

Table 5 indicates summarization of a flux and viscosity η of each liquid being filtered by the two-layer-bonded-type filtering filter (Example 1-1) made of the porous PSF membrane/diamond-like carbon film.

**[Table 5]**

| Types | Molecular formula | flux/ L·m^{-2.}h⁻¹ | *η*@25°C / mPa s |
|---|---|---|---|
| n-hexane | *C₆H₁₄* | 88.1 | 0.295 |
| n-heptane | *C₇H₁₆* | 40.9 | 0.389 |
| n-octane | *C₈H₁₈* | 14.3 | 0.509 |
| n-decane | *C₁₀H₂₂* | 10.4 | 0.85 |
| Cyclohexane | *C₆H₁₂* | 16.9 | 0.887 |

As indicated in Table 5, as a molecular size increased in the case of comparison of normal alkanes, the flux decreased. That is, the flux satisfied a magnitude correlation of n-hexane > n-heptane > n-octane > n-decane.

The permeability was affected by not only the molecular size but also a molecular shape. With respect to the n-hexane and the cyclohexane, even though the molecular weight was substantially equal, and the flux of the cyclohexane was about one fifth of the flux of the n-hexane, which were greatly different from each other. That is, a permeation rate of the n-hexane was about 5 times a permeation rate of the cyclohexane.

The viscosity of the n-hexane is 0.295 mPa·s, and the viscosity of the cyclohexane is 0.887 mPa·s. The permeation of the liquid through the diamond-like carbon film is believed to follow the Darcy's law, and it can be said that the n-hexane permeates 3 times faster than the cyclohexane from the difference in viscosity. However, the permeation rate of the n-hexane is sufficiently large even in view of the influence of the viscosity.

The differences in flux between the n-hexane and the cyclohexane are also considered to be due to the differences in pore diameter. The n-hexane having all-trans conformation (most stable conformation) has a molecular width being in the range of from 0.42 nm to 0.45 nm. Meanwhile, the cyclohexane having a cyclic conformation (most stable conformation) has a molecular width being in the range of from 0.50 nm to 0.66 nm. By identification of such a molecular size of the solvent molecule, the smaller molecule fast permeates into the diamond-like carbon film. In the diamond-like carbon film of this Example, it is considered that a pore diameter of less than 0.42 nm in diameter also exists, but is considered that a pore diameter from 0.42 nm but less than 0.66 nm also exists into which the n-hexane permeates and the cyclohexane is rejected.

In addition, when the description is given in more detail, the differences in flux between the n-hexane and the cyclohexane are considered to be due to a molecular structure. That is, it indicates that the diamond-like carbon film recognizes the shape of the solvent molecule. The n-hexane has a straight chain shape, and the cyclohexane has a cyclic shape. In addition, some of the shape can be easily deformed when the molecule has the straight chain shape, but the shape is not easily deformed when the molecule has the cyclic shape. Accordingly, when the pores of the diamond-like carbon film are bent, the n-hexane having substantially the straight shape easily permeates, but the cyclohexane having substantially the cyclic shape hardly permeates, whereby it is considered to cause the difference in flux.

### <Evaluation of separation characteristics of two-layer-bonded-type filtering filter made of porous PSF membrane/diamond-like carbon film (1)>

Next, separation characteristics of the two-layer-bonded-type filtering filter (Example 1-1) made of the porous PSF membrane/diamond-like carbon film was examined. For comparison, separation characteristics of the porous PSF membrane (Test Example 1) used as the porous support substrate was also examined.

Specifically, 0.5 mM azobenzene/ethanol solution (feed solution) was filtered under a suction condition of -80 kPa, and was separated into a solid substance on the surface of the filter and filtrate. The surface of the filter was observed and an ultraviolet/visible absorption spectrum of the filtrate was measured at the same time.

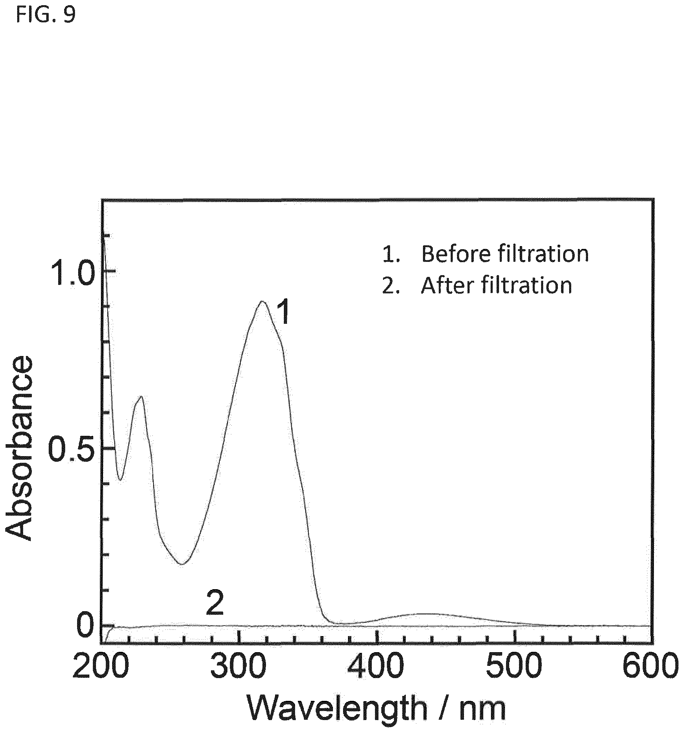

Fig. 9 is a graph illustrating the separation characteristics of the diamond-like carbon film directly prepared on the porous PSF membrane, and illustrates an ultraviolet/visible absorption spectrum before and after filtration of the 0.5 mM azobenzene/ethanol solution. Fig. 9 illustrates an ultraviolet/visible absorption spectrum (1) of the 0.5 mM azobenzene/ethanol solution (feed solution) and an ultraviolet/visible absorption spectrum (2) of the filtrate in the case of using the two-layer-bonded-type filtering filter (Example 1-1). As illustrated in Fig. 9, azobenzene (molecular weight: 182.2 and molecular width: 0.69 nm) could be rejected to the extent of 100% in the two-layer-bonded-type filtering filter (Example 1-1). In the diamond-like carbon film according to this Example, since the cyclohexane permeates at a high speed and the azobenzene is rejected to the extent of 100%, it can be confirmed that pores exist which have a diameter of from 0.66 nm but less than 0.80 nm.

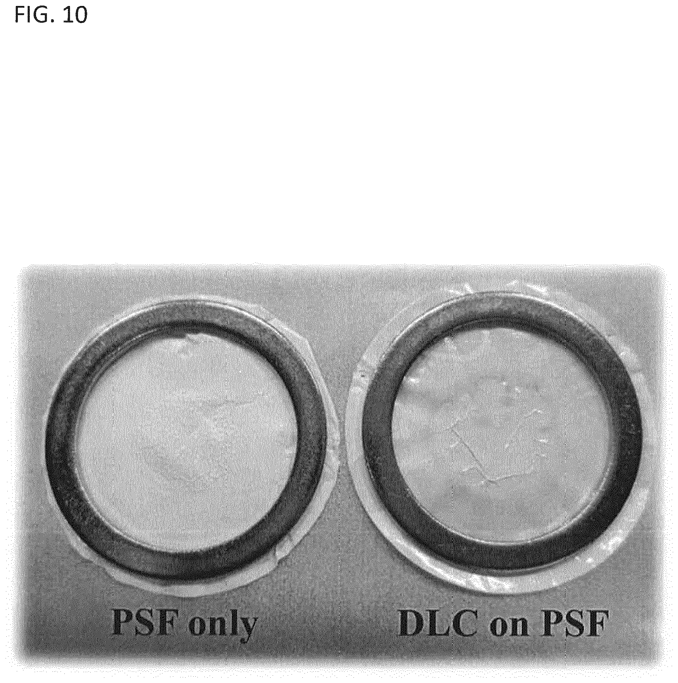

Fig. 10 is a photograph illustrating an appearance of the membranes after a filtration experiment of azobenzene is performed using the porous PSF membrane and the diamond-like carbon film directly prepared on the porous PSF membrane. Fig. 10 illustrates a photograph of the surfaces of the porous PSF membrane (Test Example 1) and the two-layer-bonded-type filtering filter (Example 1-1) after the azobenzene/ethanol solution is filtered.

As illustrated in Fig. 10, in the porous PSF membrane (Test Example 1), coloring derived from the azobenzene was not observed, the azobenzene was not adsorbed, and the azobenzene could not be separated.

In the two-layer-bonded-type filtering filter (Example 1-1), meanwhile, coloring derived from the azobenzene was observed, and the azobenzene was separated from the filtrate (ethanol).

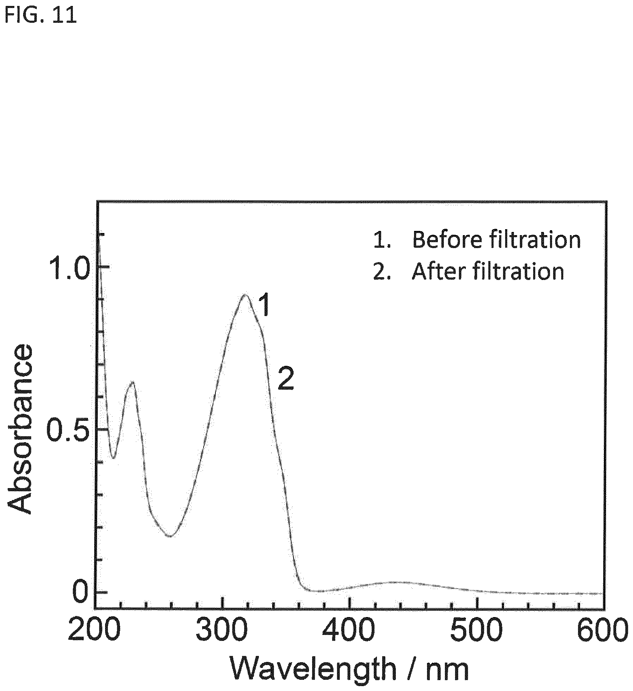

In addition, Fig. 11 illustrates separation characteristics of the porous PSF membrane, and illustrates an ultraviolet/visible absorption spectrum before and after filtration of 0.5 mM azobenzene/ethanol solution. Fig. 11 illustrates an ultraviolet/visible absorption spectrum (1) of the 0.5 mM azobenzene/ethanol solution (feed solution) and an ultraviolet/visible absorption spectrum (2) of the filtrate when only the porous PSF membrane (Test Example 1) is used. As illustrated in Fig. 11, the ultraviolet/visible absorption spectrum of the feed solution was overlapped with that of the filtrate. Thus, it was found that the azobenzene could not be separated from the filtrate in the porous PSF membrane (Test Example 1).

As described above, it can be concluded that rejecting performance of the two-layer-bonded-type filtering filter (Example 1-1) has been controlled by the pore diameter of the diamond-like carbon film rather than the porous PSF membrane.

Furthermore, when the two-layer-bonded-type filtering filter (Example 1-1) is used, the flux of the feed solution was 4 L/m²h. The flux of the 0.5 mM azobenzene/ethanol solution (feed solution) was substantially equal to the flux of the ethanol solution, and the flux did not greatly vary even in the presence of azobenzene.

Table 6 indicates evaluation results of the separation characteristics of the two-layer-bonded-type filtering filter (Example 1-1) and the porous PSF membrane (Test Example 1).

**[Table 6]**

| **Test No./Example No. Types** | | Evaluation of separation characteristics of porous PSF membrane/two-layer-bonded-type filtering filter (1) | |
|---|---|---|---|
| | | Flux of 0.5 mM azobenzene/ethanol solution (L/m²h) Suction condition : -80 kPa | Filtration of azobenzene |
| Test Example 1 | Porous PSF membrane | - | Not rejecting |
| Example 1-1 | Two-layer-bonded-type filtering filter | 4.0 | 100% rejecting |

### <For pore diameter of filtering filter made of diamond-like carbon>

From the molecular sizes of the n-hexane and the cyclohexane and the size and the rejection rate of the azobenzene, the pore diameter of the diamond-like carbon film in the two-layer-bonded-type filtering filter (Example 1-1) made of the porous PSF membrane/diamond-like carbon film was calculated.

First, an average of width, height and length of the azobenzene molecule was 0.80 nm which was calculated by a molecular modeling system (Spartan'04).

The size of organic molecules is grasped by various methods, but the molecular width of the azobenzene is 0.69 nm, the molecular length thereof is 1.37 nm, and the molecular thickness thereof is 0.33 nm which are calculated from a molecular model, respectively. In addition, the average molecular size calculated from the length, width, and thickness of the azobenzene molecule is 0.80 nm as a sphere-equivalent diameter.

Next, this value was considered as a sphere diameter, and the pore diameter was calculated based on the equation of Ferry-Renkin (Non Patent Literature 4). In Non Patent Literature 4, a theory is described which calculates the pore diameter from the size and the rejection rate of a solute when the flow of the liquid in the fine pores has parabora-curved speed distribution. On the assumption that (1) the rejection rate of the azobenzene was 99% and (2) the pores of the carbon film had a cylindrical shape, the pore diameter was calculated to be 0.86 nm.

In addition, when the rejection rate of the azobenzene was 100%, the pore diameter was 0.80 nm.

In Patent Literature 1, the maximum rejection rate of the azobenzene was 95.2% in the diamond-like carbon film manufactured using the nanostrands as the sacrificial layer. When the rejection rate of the azobenzene is 95.2%, the diameter of the pores is assumed to be 0.95 nm from the sphere-equivalent diameter (0.80 nm) using the equation of Ferry-Renkin. That is, when the nanostrands are used as the sacrificial layer, it means that pores of 0.95 nm or more, which is considerably larger than the molecular size of the azobenzene, are formed inside the diamond-like carbon film.

In the equation of Ferry-Renkin, on the assumption that the azobenzene freely rotates in the solution and cylindrical pores are formed inside the diamond-like carbon film, the diameter of the pores is estimated. In the filtration experiment, solute molecules (in this case, azobenzene) are mixed with a solvent and rotate at a high speed. For this reason, when the size of the pores is about 1 nm, the cylindrical pores may be assumed to be formed.

In the diamond-like carbon film of the present invention, the rejection rate of the azobenzene is from 99% to 100%. In this case, the diameter of the pores estimated from the equation of Ferry-Renkin is 0.86 nm at the rejection rate of 99% and 0.80 nm at the rejection rate of 100%. When the rejection rate is 100%, the pores of less than 0.80 nm may be formed, but the pores of 0.8 nm or more cannot be considered to be formed. This reason is that some little azobenzene permeates into the membrane and thus the rejection rate of 100% is not achieved when the pores of 0.8 nm or more are present.

When a removal rate is 100%, an average size of the pores in the diamond-like carbon film is smaller than 0.8 nm.

### <With respect to membranes disclosed in scientific papers or patents in the Citation List>

In Non Patent Literature 2 or Patent Literature 1, the diamond-like carbon films have been reported which have the high rejection rate with respect to the azobenzene dissolved in the organic solvent. The researchers attempted to manufacture a superior filtering filter using the methods disclosed in these literatures. In the diamond-like carbon film manufactured using the nanostrands as the sacrificial layer, however, the rejection rate of the azobenzene was 95.2% at maximum.

### <Evaluation of separation characteristics of two-layer-bonded-type filtering filter made of porous PSF membrane/diamond-like carbon film (2)>

0.01 M aqueous NaCl solution (feed solution) was used as a feed solution and was filtered by the two-layer-bonded-type filtering filter (Example 2-1) made of the porous PSF membrane/diamond-like carbon film having the diamond-like carbon film formed at -20°C, a flux thereof was measured under a suction condition of -80 kPa, and thus separation characteristics of the two-layer-bonded-type filtering filter (Example 2-1) made of the porous PSF membrane/diamond-like carbon film was examined.

A refractive index of the feed solution and the filtrate was measured.

The refractive index of the feed solution at 20°C was 1.33306, and the refractive index of the filtrate at 20°C was 1.33297.

From the refractive index of the filtrate, a concentration of NaCl of the filtrate was estimated to be 0.00203 M.

Further, from this, the rejection rate of NaCl was 80%.

In addition, an osmotic pressure of 0.01 M aqueous NaCl solution (feed solution) at 25°C is 49 kPa, and thus NaCl solution can be filtered under the suction condition of -80 kPa.

Moreover, the flux thereof was 0.71 L/m²h.

From the above results, the filtering filter made of the diamond-like carbon had reverse osmosis (RO) performance.

Table 7 indicates a result of the evaluation (2) of the separation characteristics of the two-layer-bonded-type filtering filter (Example 2-1).

**[Table 7]**

| **Example No**. | Evaluation of separation characteristics of two-layer-bonded-type filtering filter (2) | | | | | |
|---|---|---|---|---|---|---|
| | Flux of 0.01 M aqueous NaCl solution (L/m²h) (suction condition of -80 kPa) | Refractive index of feed solution | Refractive index of filtrate | Concentration of NaCl in filtrate (M) | Rejection rate of NaCl (%) | Osmotic pressure of 0.01 M aqueous NaCl solution (feed solution) (kPa) |
| Example 2-1 | 0.71 | 1.33306 | 1.33297 | 0.00203 | 80 | 49 |

In the reverse osmosis membrane disclosed in Patent Literature 1, a flux of water was 4.7 L/m²h under a pressurizing condition of 2.4 MPa, and a rejection rate of NaCl was 68.5%. In addition, a rejection rate of azobenzene was 95.2%, and pores of 0.95 nm or more were present.

In contrast, the two-layer-bonded-type filtering filter (Example 2-1) has a flux of 0.71 L/m²h (pressure difference: 80 kPa) despite the pressure difference in front and rear of the membrane is 1/30. The rejection rate of NaCl is also drastically improved to be 80%. Moreover, it was confirmed that the two-layer-bonded-type filtering filter (Example 2-1) has the rejection rate of azobenzene of 100% and has no pores of 0.80 nm or more.

A diameter of hydrated sodium ions is estimated to be 0.72 nm, and a diameter of hydrated chloride ions is 0.66 nm. The fact that rejection rate of these ions reaches 80% indicates that pores having a size equal to the size of these ions are formed inside the diamond-like carbon film.

### (Example 3)

In the formation of the diamond-like carbon film by the plasma CVD method, the substrate may etched or chemically deteriorated. When the polymer ultrafiltration membrane is used as the porous support substrate, a temperature locally rises in the vicinity of the surface, and thus a phenomenon such as softening, melting, densification, or carbonization of the ultrafiltration membrane can be also predicted, whereby there is a possibility that a separation function layer is formed by such deterioration of the polymer.

In this Example, a self-supported membrane of diamond-like carbon was manufactured to demonstrate the fact that the outermost diamond-like carbon film functions as a filtering filter, the self-supported membrane was transferred to a porous support substrate, and thus performance of the filtering filter was evaluated.

A glucose layer was formed on the support substrate such as silicon or glass, thereby preparing a diamond-like carbon film by a plasma CVD method thereon. Thereafter, the glucose layer was eluted using purified water, and the diamond-like carbon film was exfoliated as the self-supported membrane from the support substrate and was then transferred onto a PSF ultrafiltration membrane. Even in a filtering filter manufactured in this way, the rejection rate of azobenzene was confirmed to be 99% or more and it was demonstrated that the diamond-like carbon film acted as a separation function layer of azobenzene.

Specific procedures are as follows.

### <Preparation of filtering filter of exfoliated and transferred diamond-like carbon>

First, a silicon support substrate was prepared.

Then, a glucose layer as an intermediate layer was prepared on the support substrate by a spin coating method.

Then, a diamond-like carbon film (DLC film) was prepared on the intermediate layer by a plasma CVD method.

Subsequently, only the intermediate layer was eluted using purified water, and the DLC film was exfoliated from the support substrate. Instead of the purified water, a dilute hydrofluoric acid aqueous solution may be used.

Then, the exfoliated DLC film (exfoliated and transferred diamond-like carbon film) was transferred onto the porous PSF membrane, and a filtering filter (Example 3-1) was prepared.

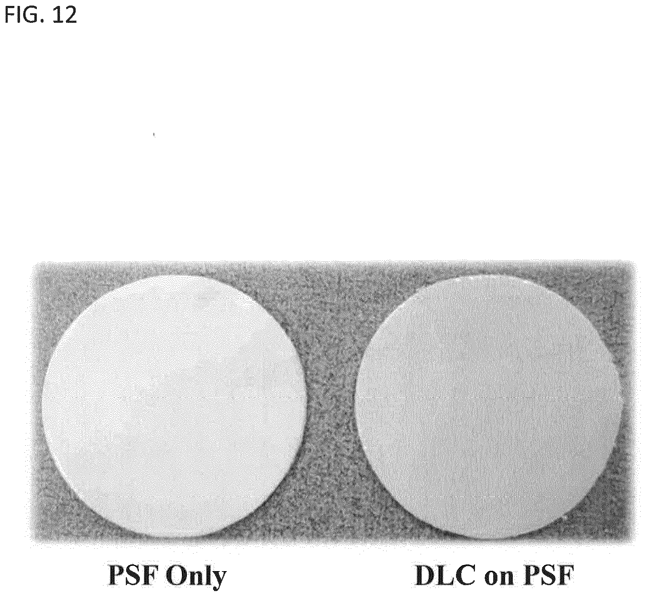

Fig. 12 is a photograph illustrating an appearance of the surfaces of the porous PSF membrane and the porous PSF membrane onto which the diamond-like carbon film is transferred. In Fig. 12, the photograph of only the porous PSF membrane and a photograph of the filtering filter (Exampl e 3-1) obtained in such a manner that the exfoliated and transferred diamond-like carbon film is disposed on the porous PSF membrane.

A filtering filter (Example 3-2) was prepared in the same manner as in Example 3-1 except that a sucrose layer was used as an intermediate layer.

A filtering filter (Example 3-3) was prepared in the same manner as in Example 3-1 except that a glucose/sucrose mixture layer was used as an intermediate layer.

A filtering filter (Example 3-4) was prepared in the same manner as in Example 3-1 except that a glycerin layer was used as an intermediate layer.

A filtering filter (Example 3-5) was prepared in the same manner as in Example 3-1 except that a polyethylene glycol layer was used as an intermediate layer.

This example is outside of the scope claimed.

A filtering filter (Example 3-6) was prepared in the same manner as in Example 3-1 using a dilute hydrofluoric acid aqueous solution when a silicon thermal oxide film was used as an intermediate layer.

This example is outside of the scope claimed.

A filtering filter (Example 3-7) was prepared in the same manner as in Example 3-1 using a dilute hydrofluoric acid aqueous solution when glass was used as a support substrate.

### (Example 4)

A filtering filter (Example 4-1) was prepared in the same manner as in Example 3-1 except for using a porous alumina film instead of the porous PSF membrane, the filtering filter being obtained in such a manner that an exfoliated and transferred diamond-like carbon film was disposed on the porous alumina film.

A filtering filter (Example 4-2) was prepared in the same manner as in Example 4-1 except for using a porous aluminum film instead of the porous alumina film, the filtering filter being obtained in such a manner that an exfoliated and transferred diamond-like carbon film was disposed on the porous aluminum film.

### <Evaluation of separation characteristics of the filtering filter obtained in such a manner that the exfoliated and transferred diamond-like carbon film is disposed on the porous membrane>

Next, with respect to the filtering filter (Example 3-1) obtained in such a manner that the exfoliated and transferred diamond-like carbon film was disposed on the porous PSF membrane, separation characteristics was examined.

Specifically, 0.5 mM azobenzene/ethanol solution (feed solution) was filtered under a suction condition of -80 kPa to obtain filtrate. The surface of the filtering filter was observed and an ultraviolet/visible absorption spectrum of the filtrate was measured at the same time.

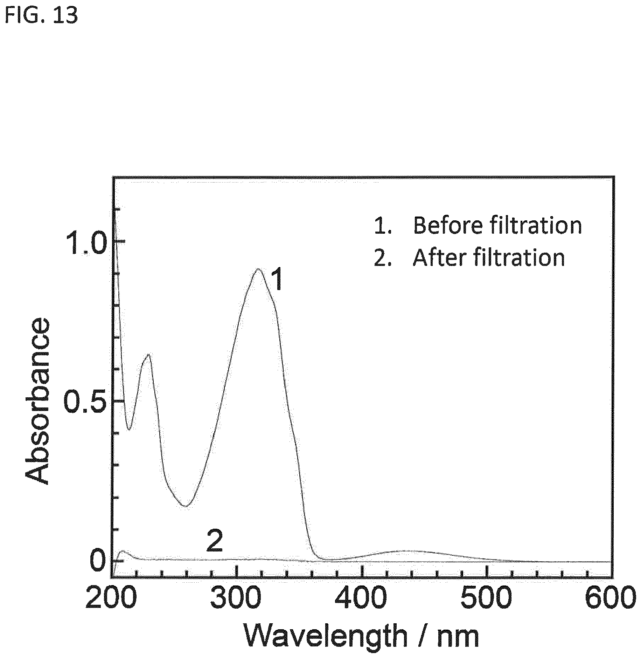

Fig. 13 is a graph illustrating the separation characteristics of the diamond-like carbon film transferred directly onto the porous PSF membrane,
and illustrates an ultraviolet/visible absorption spectrum before and after filtration of the 0.5 mM azobenzene/ethanol solution. Fig. 13 illustrates an ultraviolet/visible absorption spectrum (1) of the 0.5 mM azobenzene/ethanol solution (feed solution) and an ultraviolet/visible absorption spectrum (2) of the filtrate in the case of using the filtering filter (Example 3-1). As illustrated in Fig. 13, azobenzene (molecular weight: 182.2 and molecular width: 0.69 nm) could be rejected to the extent of 99% in the filtering filter (Example 3-1).

In addition, when the filtering filter (Example 3-1) is used, the flux of the feed solution was 2 L/m²h.

As a result, separation characteristics could be exhibited not only in the diamond-like carbon film directly prepared on the porous PSF membrane but also the diamond-like carbon film transferred on the porous PSF membrane.

Table 8 indicates preparation conditions and thicknesses of the filtering filters (Examples 3-1 to 3-7, 4-1, and 4-2).

**[Table 8]**

| Example No. | Types | First layer | Second layer | Film-forming temperature of DLC film (°C) | Film-forming time of DLC film (min) | Thickness (nm) | Support substrate | Intermediate layer |
|---|---|---|---|---|---|---|---|---|
| Example 3-1 | Filtering filter | Porous PSF membrane of Test Example 1 | Exfoliated and transferred DLC film | 25 | 2 | 10 | Silicon | Glucose |
| Example 3-2 | Filtering filter | Porous PSF membrane of Test Example 1 | Exfoliated and transferred DLC film | 25 | 2 | 10 | Silicon | Sucrose |
| Example 3-3 | Filtering filter | Porous PSF membrane of Test Example 1 | Exfoliated and transferred DLC film | 25 | 2 | 10 | Silicon | Glucose/sucrose mixture |
| Example 3-4 | Filtering filter | Porous PSF membrane of Test Example 1 | Exfoliated and transferred DLC film | 25 | 2 | 10 | Silicon | Glycerin |
| Example 3-5 | Filtering filter | Porous PSF membrane of Test Example 1 | Exfoliated and transferred DLC film | 25 | 2 | 10 | Silicon | Polyethylene glycol |
| Example 3-6 | Filtering filter | Porous PSF membrane of Test Example 1 | Exfoliated and transferred DLC film | 25 | 2 | 10 | Silicon | Silicon thermal oxide film |
| Example 3-7 | Filtering filter | Porous PSF membrane of Test Example 1 | Exfoliated and transferred DLC film | 25 | 2 | 10 | Glass | Glucose |
| Example 4-1 | Filtering filter | Porous alumina film | Exfoliated and transferred DLC film | 25 | 2 | 10 | Silicon | Glucose |
| Example 4-2 | Filtering filter | Porous aluminum film | Exfoliated and transferred DLC film | 25 | 2 | 10 | Silicon | Glucose |

Table 9 indicates evaluation results of the separation characteristics of the filtering filter (Example 3-1).

**[Table 9]**

| **Example No.** | Evaluation of separation characteristics of filtering filter | |
|---|---|---|
| | Flux of 0.5 mM azobenzene/ethanol solution (suction condition of-80 kPa) (L/m²h) | Filtration of azobenzene |
| Example 3-1 | 2.0 | At least 99% rejecting |

### <Preparation of two-layer-bonded-type filtering filter made of porous PSF membrane/diamond-like carbon film (2)>

In Examples 5 to 7, a diamond-like carbon film was prepared on a porous PSF membrane by a sputtering method.

### (Example 5)

The porous PSF membrane prepared in Test Example 1-1 was placed in a chamber of a sputtering apparatus. Then, after an internal pressure of the chamber was reduced, argon and methane were introduced at a predetermined flow rate (argon: 120 mL/min, methane: 12 mL/min) to make a mixed gas atmosphere, and the internal pressure of the chamber was further reduced to be 0.5 Pa or less. Diamond-like carbon film was directly formed on the porous PSF membrane by a magnetron sputtering method, and thus a two-layer-bonded-type filtering filter (Example 5-1) made of the porous PSF membrane/diamond-like carbon film was prepared. A film-forming time was 77 min.

Next, a two-layer-bonded-type filtering filter (Example 5-2) was prepared in the same manner as in Example 4-1 except that a film-forming time was 39 minutes.

### (Example 6)

The porous PSF membrane prepared in Test Example 1-1 was placed in a chamber of a sputtering apparatus. Then, after an internal pressure of the chamber was reduced, an argon gas was introduced at a predetermined flow rate (10 mL/min), and the internal pressure of the chamber was further reduced to be 0.7 Pa or less. Diamond-like carbon film was directly formed on the porous PSF membrane by a magnetron sputtering method, and thus a two-layer-bonded-type filtering filter (Example 6-1) made of the porous PSF membrane/diamond-like carbon film was prepared. A film-forming time was 72 min.

Next, a two-layer-bonded-type filtering filter (Example 6-2) was prepared in the same manner as in Example 6-1 except that a film-forming time was 36 minutes.

### (Example 7)

The porous PSF membrane prepared in Test Example 1-1 was placed in a chamber of a sputtering apparatus. A pressure at the time of membrane formation without introduction of a gas into the chamber was set to be 0.1 Pa or less. Diamond-like carbon film was directly formed on the porous PSF membrane using an arc ion plating method which was one of sputtering methods, and thus a two-layer-bonded-type filtering filter (Example 7-1) made of the porous PSF membrane/diamond-like carbon film was prepared. A film-forming time was 15 min.

Next, a two-layer-bonded-type filtering filter (Example 7-2) was prepared in the same manner as in Example 7-1 except that a film-forming time was 7 minutes.

In Examples 5 to 7, a thickness of the diamond-like carbon film is controlled by adjustment of the film-forming time. The thickness of the membrane is 100 nm in Examples 5-1, 6-1, and 7-1, and the thickness of the membrane is 50 nm in Examples 5-2, 6-2, and 7-2. In these Examples, a film-forming rate is 8 nm/min or less.

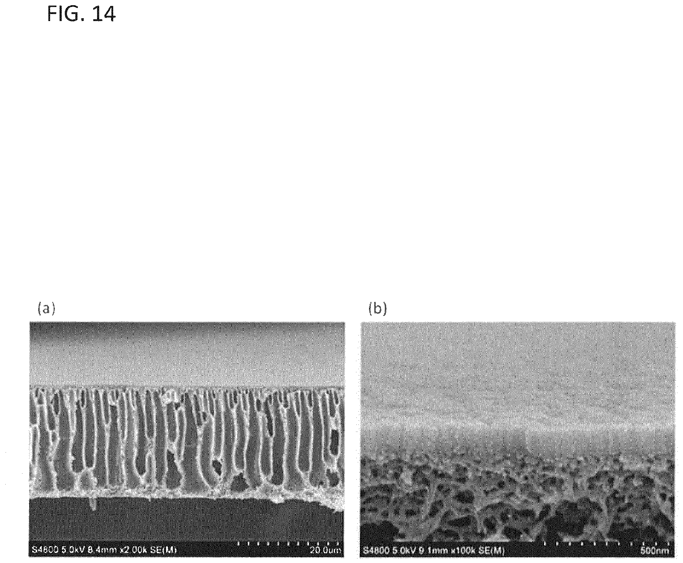

Fig. 14(a) is an electron microphotograph at a low magnification illustrating a cross-section of the two-layer-bonded-type filtering filter (Example 6-1) made of the diamond-like carbon film directly prepared on the porous PSF membrane by the sputtering method, and Fig. 14(b) is a high magnification image thereof. When the diamond-like carbon film is sputtered on the porous PSF membrane, all one side of the porous PSF membrane is covered with the diamond-like carbon. Further, from the observation at a high magnification, it can be confirmed that the porous PSF membrane and the diamond-like carbon film come in closely contact with each other very well.

Table 10 indicates film-forming conditions and thicknesses of the diamond-like carbon films (DLC films, DLC is an acronym for Diamond-Like Carbon) in Examples 5 to 7.

**[Table 10]**

| First layer | Second layer | Introduction gas | Film-forming pressure (Pa) | Film-forming time (min) | Thickness (nm) | |
|---|---|---|---|---|---|---|
| Porous PSF membrane of Test Example 1 | DLC film | Argon, methane | 0.5 or less | 77 | 100 | * |
| Porous PSF membrane of Test Example 1 | DLC film | Argon, methane | 0.5 or less | 39 | 50 | |
| Porous PSF membrane of Test Example 1 | DLC film | Argon | 0.7 or less | 72 | 100 | * |
| Porous PSF membrane of Test Example 1 | DLC film | Argon | 0.7 or less | 36 | 50 | |
| Porous PSF membrane of Test Example 1 | DLC film | None | 0.1 or less | 15 | 100 | * |
| Porous PSF membrane of Test Example 1 | DLC film | None | 0.1 or less | 7 | 50 | |

| | | | | | | |
|---|---|---|---|---|---|---|
| *comparative | | | | | | |

### <Evaluation of separation characteristics of two-layer-bonded-type filtering filter made of porous PSF membrane/diamond-like carbon film (3)>

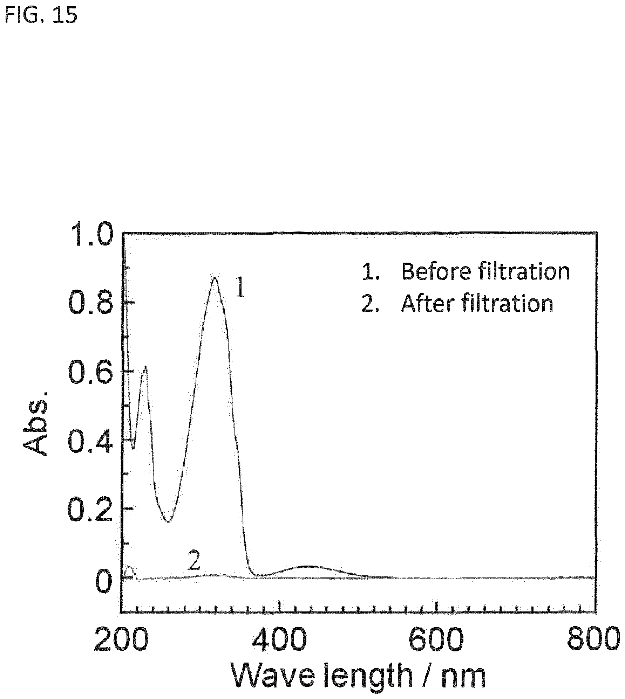

Fig. 15 is a graph illustrating the separation characteristics of the diamond-like carbon film directly prepared on the porous PSF membrane by the sputtering method, and illustrates an ultraviolet/visible absorption spectrum before and after filtration of the 0.5 mM azobenzene/ethanol solution. Fig. 15 illustrates an ultraviolet/visible absorption spectrum (1) of the 0.5 mM azobenzene/ethanol solution (feed solution) and an ultraviolet/visible absorption spectrum (2) of the filtrate in the case of using the two-layer-bonded-type filtering filter (Example 5-1). As illustrated in Fig. 15, azobenzene (molecular weight: 182.2 and molecular width: 0.69 nm) could be rejected to the extent of 99% or more in the two-layer-bonded-type filtering filter (Example 5-1). The diamond-like carbon film according to this Example can be confirmed to have a pore diameter of less than 0.86 nm.

Table 11 indicates evaluation results of the separation characteristics of the two-layer-bonded-type filtering filter (Example 5-1).

**[Table 11]**

| Example No. | Evaluation of separation characteristics of two-layer-bonded-type filtering filter (3) | |
|---|---|---|
| | Flux of 0.5 mM azobenzene/ethanol solution (suction condition of -80 kPa) (L/m²h) | Filtration of azobenzene |
| Example 5-1 | 2.9 | At least 99% rejecting |

### <Evaluation of separation characteristics of two-layer-bonded-type filtering filter made of porous PSF membrane/diamond-like carbon film (4)>

Using the two-layer-bonded-type filtering filter (Example 5-1) made of the porous PSF membrane/diamond-like carbon film having the DLC film formed by the sputtering method using 0.01 M aqueous NaCl solution (feed solution) as a feed solution, a flux was measured under a suction condition of -80 kPa by a reduced-pressure filtration method. In addition, by measurement of a concentration of NaCl contained in the filtrate, separation characteristics of the two-layer-bonded-type filtering filter were examined.

The concentrations of NaCl contained in the feed solution and the filtrate were quantified from the refractive index. The refractive index of the feed solution at 20°C was 1.33306, and the refractive index of the filtrate at 20°C was 1.33296. From the latter value, the concentration of NaCl contained in the filtrate was estimated to be 0.00102 M. Furthermore, from the change in concentration of the feed solution and the filtrate, a rejection rate of NaCl was calculated to be 90%.

An osmotic pressure of 0.01 M aqueous-containing NaCl solution (feed solution) at 25°C is calculated to be 49 kPa. In this Example, the suction filtration is performed at -80 kPa, and the pressure obtained by subtraction of the osmotic pressure (driving force of filtration) is calculated to be -31 kPa. In these experimental conditions, the flux of the filtrate was 1.05 L/m²h.

Table 12 indicates evaluation results of the separation characteristics of two-layer-bonded-type filtering filter according to Example 5-1.

**[Table 12]**

| Example No. | Evaluation of separation characteristics of two-layer-bonded-type filtering filter (4) | | | | | |
|---|---|---|---|---|---|---|
| | Flux of 0.01 M aqueous NaCl solution (L/m²h) (suction condition of -80 kPa) | Refractive index of feed solution | Refractive index of filtrate | Concentration of NaCl in filtrate (M) | Rejection rate of NaCl (%) | Osmotic pressure of 0.01 M aqueous NaCl solution (feed solution) (kPa) |
| Example 5-1 | 1.05 | 1.33306 | 1.33296 | 0.00102 | 90 | 49 |

### Industtrial Applicability

The NF or RO membrane made of the hard carbon film, the filtering filter, the two-layer-bonded-type filtering filter, and the methods for manufacturing the same according to the present invention can provide the filtering filter that has the oil resistance and can separate the azobenzene dye present in the organic solvent from the organic solvent to the extent of 99% or more and the method for manufacturing the same and are available in a treatment of waste containing the organic solvent, a treatment of produced water, a manufacture of a high-purity solvent, and a food industry. In particular, since the two-layer-bonded-type filtering filter is formed on the ultrafiltration membrane having the pores of 50 nm or less on the surface even when the thickness of the NF or RO membrane made of the hard carbon film is 50 nm or less, the mechanical strength can be increased while the high permeability of liquid is achieved, whereby the pressure resistance and the durability of the filtration membrane can be improved. In addition, since the NF or RO membrane made of the hard carbon film is formed on the flexible ultrafiltration membrane, it is easily worked into a filtration module. That is, it can be used as the NF or RO membrane having the fast filtering speed and high durability. In addition, since the removal rate of sodium chloride can be controlled to the extent of 80% or more, it is very convenient for using as the NF membrane resistant to the organic solvent.

### Reference Signs List

10: NF or RO membrane made of hard carbon film
10a: One surface
10b: The other side
10c: pore
10c1: pore
10c2: pore
10c3: pore
10c4: pore
20: Support substrate
20a: One side
21: filtering filter
30: ultrafiltration membrane
30a: One side (bonding face)
31: two-layer-bonded-type filtering filter

## Claims

1. A nanofiltration (NF) or reverse osmosis (RO) membrane made of a diamond like carbon film, wherein the NF or RO membrane has a thickness of from 5 nm to 50 nm, and has pores penetrating the NF or RO membrane, and having a maximum pore diameter of less than 0.86 nm when the pore diameter is measured as identified in the description according to the Ferry-Renkin method.

2. An NF or RO membrane as claimed in claim 1, wherein the NF or RO membrane allows at least 99% of an azobenzene dye present in an organic solvent not to pass therethrough, wherein the azobenzene dye rejection is determined as set out in the description.

3. An NF or RO membrane as claimed in either one of claims 1 and 2, wherein the NF or RO membrane exhibits a rejection rate for NaCl in water of at least 80%, when calculated from the refractive indices measured at 20°C of a feed solution of NaCl in water and the filtrate.

4. A filtering filter in which the NF or RO membrane as claimed in claim 1 is disposed on one side of a porous support substrate.

5. A two-layer-bonded-type filtering filter in which the NF or RO membrane made of the diamond like carbon film as claimed in claim 1 is bonded to one side of an ultrafiltration membrane, wherein the ultrafiltration membrane is configured such that a surface thereof is formed with pores having a diameter of from 1 nm to 50 nm and does not include local protrusions of 50 nm per 1 µm² of the surface.

6. A two-layer-bonded-type filtering filter as claimed in claim 5, wherein the ultrafiltration membrane is a porous organic membrane.

7. A two-layer-bonded-type filtering filter as claimed in claim 6, wherein the porous organic membrane is a polysulfone (PSF) membrane.

8. A method for manufacturing a nanofiltration (NF) or reverse osmosis (RO) membrane made of a diamond like carbon film as claimed in any one of claims 1 to 3, the method comprising:
a step in which an intermediate layer is formed on one side of a support substrate by a spin coating method, a casting method, a dipping method, or a die coating method, wherein the intermediate layer is made of any one material selected from the group consisting of glucose, sucrose, a glucose/sucrose mixture, and glycerin; and wherein the surface of the intermediate layer does not include local protrusions of 50 nm or more per 1 µm² of the surface;
a step in which the support substrate formed with the intermediate layer is placed in a vacuum chamber, an internal pressure of the vacuum chamber is reduced, a temperature of the support substrate is set to be from -20°C to 30°C, and then a diamond like carbon film is formed on one side of the intermediate layer at a film-forming rate of 50 nm/min or less by a plasma CVD method or a sputtering method; and
a step in which the support substrate formed with the diamond like carbon film is immersed in water or an aqueous acid solution, and the NF or RO membrane made of the diamond like carbon film is exfoliated from the support substrate.

9. A method for manufacturing an NF or RO membrane as claimed in claim 8, wherein the support substrate is silicon or glass.

10. A method for manufacturing a filtering filter in which an NF or RO membrane manufactured by the method for manufacturing the NF or RO membrane as claimed in claim 8 is disposed on one side of a porous support substrate made of any one porous membrane of a porous organic membrane, a porous inorganic membrane, or a porous metal membrane, and thus the filtering filter is manufactured.

11. A method for manufacturing a two-layer-bonded-type filtering filter as claimed in any one of claims 5 to 7, comprising:
a pre-treatment step in which an ultrafiltration membrane is subjected to an organic solvent washing treatment and a vacuum drying treatment after being prepared such that a surface thereof is formed with pores having a diameter of from 1 nm to 50 nm and does not include local protrusions of 50 nm or more per 1 µm² of the surface; and
a step in which the pre-treated ultrafiltration membrane is placed in a vacuum chamber, an internal pressure of the vacuum chamber is reduced, a temperature of the pre-treated ultrafiltration membrane is set to be from -20°C to 30°C, and then a nanofiltration (NF) or reverse osmosis (RO) membrane made of a diamond like carbon film is formed on one side of the pre-treated ultrafiltration membrane at a film-forming rate of 50 nm/min or less by a plasma CVD method or a sputtering method.

## Patentansprüche

1. Nanofiltrations- (NF-) oder Umkehrosmose- (RO-) -Membran aus einem diamantenähnlichen Kohlenstofffilm, wobei die NF- oder RO-Membran eine Dicke von 5 nm bis 50 nm aufweist, und Poren aufweist, die die NF- oder RO-Membran durchdringen und die einen maximalen Porendurchmesser von weniger als 0,86 nm aufweisen, wenn der Porendurchmesser, wie in der Beschreibung nach dem Ferry-Renkin-Verfahren dargelegt, gemessen wird.

2. NF- oder RO-Membran nach Anspruch 1, wobei die NF- oder RO-Membran ermöglicht, dass mindestens 99 % eines Azobenzol-Farbstoffes, der in einem organischen Lösungsmittel vorliegt, diese nicht durchqueren, wobei die Azobenzol-Farbstoff-Abstoßung wie in der Beschreibung aufgeführt bestimmt wird.

3. NF- oder RO-Membran nach einem der Ansprüche 1 und 2, wobei die NF- oder RO-Membran eine Abstoßungsrate für NaCl in Wasser von mindestens 80% aufzeigt, wenn dies aus den bei 20 °C gemessenen Brechungsindizes einer Einsatzlösung von NaCl in Wasser und des Filtrats berechnet wird.

4. Filtrationsfilter, in dem die NF- oder RO-Membran nach Anspruch 1 auf einer Seite eines porösen Trägersubstrats angeordnet ist.

5. Zweilagig gebondetes Filtrationsfilter, in dem die NF- oder RO-Membran aus dem diamantenähnlichen Kohlenstofffilm nach Anspruch 1 auf eine Seite einer Ultrafiltrationsmembran gebondet ist, wobei die Ultrafiltrationsmembran konfiguriert ist, sodass eine Oberfläche davon mit Poren gebildet wird, die einen Durchmesser von 1 nm bis 50 nm aufweisen, und keine lokalen Vorsprünge von 50 nm pro 1 µm der Oberfläche beinhaltet.

6. Zweilagig gebondetes Filtrationsfilter nach Anspruch 5, wobei die Ultrafiltrationsmembran eine poröse organische Membran ist.

7. Zweilagig gebondetes Filtrationsfilter nach Anspruch 6, wobei die poröse organische Membran eine Polysulfon- (PSF-) -Membran ist.

8. Verfahren zur Herstellung einer Nanofiltrations- (NF-) oder Umkehrosmose-(RO-) -Membran aus einem diamantenähnlichen Kohlenstofffilm nach einem der Ansprüche 1 bis 3, wobei das Verfahren umfasst:
einen Schritt, in dem eine Zwischenschicht an einer Seite eines Trägersubstrats durch ein Schleuderbeschichtungsverfahren, ein Gießverfahren, ein Tauchverfahren oder ein Die-Coating-Verfahren gebildet wird, wobei die Zwischenschicht aus einem Material, ausgewählt aus der Gruppe, bestehend aus Glucose, Saccharose, einem Glucose/Saccharose-Gemisch und Glycerin, hergestellt ist; und wobei die Oberfläche der Zwischenschicht keine lokalen Vorsprünge von 50 nm oder mehr pro 1 µm² der Oberfläche beinhaltet;
einen Schritt, in dem das mit der Zwischenschicht gebildete Trägersubstrat in einer Vakuumkammer platziert wird, ein Innendruck der Vakuumkammer vermindert wird, eine Temperatur des Trägersubstrats auf -20 °C bis 30 °C eingestellt wird und dann durch ein Plasma-CVD-Verfahren oder ein Sputterverfahren ein diamantenähnlicher Kohlenstofffilm auf einer Seite der Zwischenschicht mit einer Filmbildungsrate von 50 nm/min oder weniger gebildet wird; und
einen Schritt, in dem das mit dem diamantenähnlichen Kohlenstofffilm gebildete Trägersubstrat in Wasser oder eine wässerige Säurelösung getaucht wird und die NF- oder RO-Membran aus dem diamantenähnlicher Kohlenstofffilm von dem Trägersubstrat abgeschält wird.

9. Verfahren zur Herstellung einer NF- oder RO-Membran nach Anspruch 8, wobei das Trägersubstrat Silicium oder Glas ist.

10. Verfahren zur Herstellung eines Filtrationsfilters, in dem eine NF- oder RO-Membran, hergestellt durch das Verfahren zur Herstellung der NF- oder RO-Membran nach Anspruch 8, auf einer Seite eines porösen Trägersubstrats, das aus einer porösen Membran aus einer porösen organischen Membran, einer porösen anorganischen Membran oder einer porösen Metallmembran gefertigt, angeordnet und so der Filtrationsfilter hergestellt wird.

11. Verfahren zur Herstellung eines zweilagig gebondeten Filtrationsfilters nach einem der Ansprüche 5 bis 7, umfassend:
einen Vorbehandlungsschritt, im dem eine Ultrafiltrationsmembran nach der Vorbereitung einer Waschbehandlung mit einem organischen Lösungsmittel und einer Vakuumtrocknungsbehandlung unterzogen wird, so dass eine Oberfläche davon mit Poren gebildet wird, die einen Durchmesser von 1 nm bis 50 nm aufweisen, und keine lokalen Vorsprünge von 50 nm oder mehr pro 1 µm² der Oberfläche beinhaltet; und
einen Schritt, in dem die vorbehandelte Ultrafiltrationsmembran in einer Vakuumkammer platziert wird, ein Innendruck der Vakuumkammer vermindert wird, eine Temperatur der vorbehandelten Ultrafiltrationsmembran auf -20 °C bis 30 °C eingestellt wird und dann eine Nanofiltrations- (NF-) oder Umkehrosmose- (RO-) - Membran aus einem diamantenähnlichen Kohlenstofffilm auf einer Seite der vorbehandelten Ultrafiltrationsmembran mit einer Filmbildungsrate von 50 nm/min oder weniger durch ein Plasma-CVD-Verfahren oder ein Sputterverfahren gebildet wird.

## Revendications

1. Membrane de nanofiltration (NF) ou d'osmose inverse (RO) faite d'un film de carbone-diamant amorphe, dans laquelle la membrane NF ou RO a une épaisseur de 5 nm à 50 nm, et a des pores pénétrant dans la membrane NF ou RO, et ayant un diamètre maximal de pore de moins de 0,86 nm quand le diamètre de pore est mesuré comme identifié dans la description selon le procédé de Ferry-Renkin.

2. Membrane NF ou RO selon la revendication 1, dans laquelle la membrane NF ou RO permet à au moins 99 % d'un colorant azobenzène présent dans un solvant organique de ne pas passer à travers celle-ci, dans laquelle le rejet de colorant azobenzène est déterminé comme indiqué dans la description.

3. Membrane NF ou RO selon l'une quelconque des revendications 1 et 2, dans laquelle la membrane NF ou RO présente un taux de rejet pour NaCl dans l'eau d'au moins 80 %, quand il est calculé à partir des indices de réfraction mesurés à 20 °C d'une solution d'alimentation de NaCl dans l'eau et du filtrat.

4. Filtre de filtration dans lequel la membrane NF ou RO selon la revendication 1 est disposée sur un côté d'un substrat de support poreux.

5. Filtre de filtration de type à deux couches liées dans lequel la membrane NF ou RO faite du film de carbone-diamant amorphe selon la revendication 1 est liée à un côté d'une membrane d'ultrafiltration, dans lequel la membrane d'ultrafiltration est configurée de façon qu'une surface de celle-ci soit formée avec des pores ayant un diamètre de 1 nm à 50 nm et n'inclut pas de saillies locales de 50 nm pour 1 µm² de la surface.

6. Filtre de filtration de type à deux couches liées selon la revendication 5, dans lequel la membrane d'ultrafiltration est une membrane organique poreuse.

7. Filtre de filtration de type à deux couches liées selon la revendication 6, dans lequel la membrane organique poreuse est une membrane de polysulfone (PSF).

8. Procédé pour fabriquer une membrane de nanofiltration (NF) ou d'osmose inverse (RO) faite d'un film de carbone-diamant amorphe selon l'une quelconque des revendications 1 à 3, le procédé comprenant :
une étape dans laquelle une couche intermédiaire est formée sur un côté d'un substrat de support par un procédé de revêtement par centrifugation, un procédé de coulée, un procédé de trempage, ou un procédé de poteyage, dans lequel la couche intermédiaire est faite de n'importe quel matériau sélectionné dans le groupe constitué du glucose, du saccharose, d'un mélange de glucose/saccharose, et de la glycérine ; et dans lequel la surface de la couche intermédiaire n'inclut pas de saillies locales de 50 nm ou plus pour 1 µm² de la surface ;
une étape dans laquelle le substrat de support formé avec la couche intermédiaire est placé dans une chambre à vide, une pression interne de la chambre à vide est réduite, une température du substrat de support est réglée pour être de -20 °C à 30 °C, et ensuite un film de carbone-diamant amorphe est formé sur un côté de la couche intermédiaire à une vitesse de formation de film de 50 nm/min ou moins par un procédé CVD par plasma ou un procédé de pulvérisation cathodique ; et
une étape dans laquelle le substrat de support formé avec le film de carbone-diamant amorphe est immergé dans de l'eau ou une solution acide aqueuse, et la membrane NF ou RO faite du film de carbone-diamant amorphe est exfoliée à partir du substrat de support.

9. Procédé pour fabriquer une membrane NF ou RO selon la revendication 8, dans lequel le substrat de support est en silicium ou en verre.

10. Procédé pour fabriquer un filtre de filtration dans lequel une membrane NF ou RO fabriquée par le procédé pour fabriquer la membrane NF ou RO selon la revendication 8 est disposée sur un côté d'un substrat de support poreux fait de n'importe quelle membrane poreuse parmi une membrane organique poreuse, une membrane inorganique poreuse, ou une membrane métallique poreuse, et ainsi le filtre de filtration est fabriqué.

11. Procédé pour fabriquer un filtre de filtration de type à deux couches liées selon l'une quelconque des revendications 5 à 7, comprenant :
une étape de prétraitement dans laquelle une membrane d'ultrafiltration est soumise à un traitement de lavage par solvant organique et à un traitement de séchage sous vide après avoir été préparée de façon qu'une surface de celle-ci soit formée avec des pores ayant un diamètre de 1 nm à 50 nm et n'inclut pas de saillies locales de 50 nm ou plus pour 1 µm² de la surface ; et
une étape dans laquelle la membrane d'ultrafiltration prétraitée est placée dans une chambre à vide, une pression interne de la chambre à vide est réduite, une température de la membrane d'ultrafiltration prétraitée est réglée pour être de -20 °C à 30 °C, et ensuite une membrane de nanofiltration (NF) ou d'osmose inverse (RO) faite d'un film de carbone-diamant amorphe est formée sur un côté de la membrane d'ultrafiltration prétraitée à une vitesse de formation de film de 50 nm/min ou moins par un procédé CVD par plasma ou un procédé de pulvérisation cathodique.
